# EUROPEAN PATENT APPLICATION

(11) **EP 2 437 244 A1**
(43) Date of publication of application: **04.04.2012**
(21) Application number: 10780451.0
(22) Date of filing: 18.05.2010
(51) Int. Cl.: G09F 19/18, G03B 21/00, G06T 15/00, G09G 5/00, G09G 5/36, G09G 5/377, H04N 13/04

(54) **INFORMATION PRESENTATION DEVICE**

(30) Priority: 26.05.2009 JP 2009126310
(71) Applicant: Panasonic Corporation, Osaka 571-8501 (JP)
(72) Inventor: KAWAMURA, Ryo, Kadoma-shi Osaka 571-8686 (JP)
(74) Representative: Appelt, Christian W.
(86) International application number: PCT/JP2010/058381
(87) International publication number: WO 2010/137496

(57) **Abstract**

An information presentation apparatus includes a display frame (100) having a display surface (102) to display a display object (111), wherein an arbitrary information provision image (1b) is generated on an information provision region included in at least part of a region in which the display object (111) is present, a display object image (1a) for projecting an image on the display object (111) is generated, a display object region of the information provision region in which the display object (111) is present is set, a projection image obtained by synthesizing the information provision image (1b) and the display object image (1a) is generated, and the projection image is drawn to be projected by an image projecting unit (1).

## Description

### TECHNICAL FIELD

The present invention relates to an information presentation apparatus that projects arbitrary images or irradiation light on a region including a display object.

### BACKGROUND ART

Heretofore, as described in the following Non-Patent Literature 1, in a lighting apparatus that changes a shape of projection light, a filter called a gobo or a mask is installed to a projection instrument, and a projection portion onto which the projection light is emitted from the projection instrument is shaded. In such a way, the projection light that has passed through the filter turns to a state of being clipped into a specific shape. Specifically, in a conventional lighting system, a filter (such as a gobo) clipped into a base shape composed of a circle, a triangle, a square or the like is attached to the projection instrument, and a shape is given to an outline of the projection light.

Moreover, in the conventional lighting system, in the case where the light is desired to be projected along the specific shape, after a projection position of the projection light emitted from the projection instrument is aligned to a place having the specific shape, a rough matching operation for the projection light having the specific shape is performed by a diaphragm function and zoom function of the projection instrument.

Furthermore, heretofore, there is a lighting system that performs space directing by using a projector, which is the projection instrument, in place of a lighting appliance (a light). A lighting appliance for use in this lighting system is also called a moving projector as described in the following Patent Literature 2. This moving projector emits video light as the projection light. Therefore, the moving projector is capable of freely setting the shape and color of the projection light, and changing the projection light as a moving picture.

However, even in this lighting system, in the case of giving the shape to the projection light, in a similar way to the conventional lighting system, there is adopted a technique for roughly matching an outline of the projection light with a shape of an object as a projection target by using the base shape.

Still further, heretofore, a technology described in the following Patent Literature 1 is known as a stereoscopic display apparatus capable of effectively expressing a surface texture of an object on a three-dimensional shape model.

### CITATION LIST

### NON-PATENT LITERATURE

Non-Patent Literature 1: http://www.egghouse.com/gobo/about.htm
Non-Patent Literature 2: http://www.ushiolighting.co.jp/product/productimage/pdl/dl2

### PATENT LITERATURE

Patent Literature 1: Japanese Patent Unexamined Publication No. 2006-33818

### SUMMARY OF INVENTION

### TECHNICAL PROBLEM

However, in the above-mentioned conventional lighting system, a shape filter, a diaphragm and a zoom, which are prepared in advance, are used, and accordingly, the shape of the projection light can only be roughly matched with the object as the projection target. Moreover, in the mask processing for superimposing the base shape on the video, the base shape is formed in conformity with the shape of the object as the projection target, whereby highly accurate shape matching is possible. However, the base shape is formed into a two-dimensional shape. Therefore, in the case of viewing the object as the projection target having an arbitrary shape from different directions, it is necessary to use different base shapes, and it is difficult to divert the mask processing to a technology for simultaneously projecting plural pieces of the projection light toward the object as the projection target by a plurality of the projection instruments installed at different positions.

The present invention has been made in view of such conventional problems. It is an object of the present invention to provide an information presentation apparatus capable of projecting different images both on a display object to be projected and on a frame for displaying the display object.

### SOLUTION TO PROBLEM

An information presentation apparatus according to the present invention includes: a display frame having a display surface to display a display object; a first image data generating unit that generates first image data to project a first image including arbitrary presentation information on an information provision region including at least part of a region in which the display object is present; a second image data generating unit that generates second image data to project an arbitrary image on the display object; a display object region setting unit that sets a display object region in which the display object is present in the information provision region; a projection image data generating unit that generates projection image data obtained by synthesizing the first image data and the second image data; a projection image drawing unit that draws the projection image data; and an image projecting unit that projects a projection image drawn by the projection image drawing unit.

In the information presentation apparatus according to the present invention, the second image may be illumination light simulating light, and illuminate a whole of or a part of the display object.

The information presentation apparatus according to the present invention preferably includes: a photographing unit that photographs the information provision region; a photographed image data generating unit that generates photographed image data of a photographed image photographed by the photographing unit; a photographed image data storing unit that stores the photographed image data; a photographed image data correcting unit that generates photographed corrected image data in which the photographed image data is corrected in such a manner that the photographed image photographed by the photographing unit corresponds to the projection image projected by the image projecting unit; and a display object region specifying unit that specifies a region corresponding to the display object region from the photographed corrected image data generated by the photographed image data correcting unit, wherein the display object region setting unit sets the region specified by the display object region specifying unit as the display object region.

The information presentation apparatus according to the present invention may include a display object region adjusting unit that adjusts a position and a shape of the display object region set by the display object region setting unit.

The information presentation apparatus according to the present invention may include: an outline width setting unit that inputs an outline width of the display object region; and an outline gradating unit that processes the second image data in such a manner that a pixel value in the outline width set by the outline width setting unit gradually changes from an inner side toward an outer side.

The information presentation apparatus according to the present invention may include: a mask region setting unit that sets a mask region to cover the information provision region in an arbitrary state; and a mask processing unit that corrects the first image data to provide the mask region set by the mask region setting unit.

The information presentation apparatus according to the present invention preferably includes a first image data correcting unit that corrects the first image data generated by the first image data generating unit in such a manner that the first image projected from the image projecting unit is observed from an specified eye-point position with no distortion.

The information presentation apparatus according to the present invention preferably includes a second image data correcting unit that corrects the second image data generated by the second image data generating unit in such a manner that the second image projected from the image projecting unit is observed from an specified eye-point position with no distortion.

The information presentation apparatus according to the present invention may include: a first image data storing unit that stores the first image data; a second image data storing unit that stores the second image data; a stored image data identifying unit that identifies the first image data and the second image data stored in the first image data storing unit and the second image data storing unit; and a stored image data updating unit that updates arbitrary image data of the first image data and the second image data identified by the stored image data identifying unit, wherein the image data updated by the stored image data updating unit is transmitted to the projection image data generating unit to generate the projection image data for projecting the image by the image projecting unit.

The information presentation apparatus according to the present invention may include a time schedule managing unit that sets an update order of the first image data and the second image data identified by the stored image data identifying unit and updated by the stored image data updating unit on a time axis, wherein the projection image data generating unit generates the projection image data for projecting the image by the image projecting unit according to an updated content set by the time schedule managing unit.

The information presentation apparatus according to the present invention may include a sound producing unit that produces a sound corresponding to a dynamic display state of each image projected by the image projecting unit in the update order of the first image data and the second image data set on the time axis by the time schedule managing unit.

The information presentation apparatus according to the present invention may include a projection image drawing data recording unit that records projection image drawing data drawn by the projection image drawing unit in an external recording medium, wherein the projection image drawing data recorded in the external recording medium is output to the image projecting unit by use of a reproduction instrument.

In the information presentation apparatus according to the present invention, the display frame, a light emitting position of the image projecting unit and a mirror may be provided in a manner that meets a predetermined positional relationship, and the mirror may be provided on a line extended in an emitting direction of the image projecting unit, may be provided at an angle to receive the projection image emitted from the image projecting unit and allow the projection image to be reflected to the information provision region, and may be provided while having a distance to the image projecting unit and the display frame in such a manner that the projection image projected by the image projecting unit is projected on approximately an entire surface of the information provision region.

The information presentation apparatus according to the present invention may include a plurality of the image projecting units, each projecting the presentation information and the second image.

In the information presentation apparatus according to the present invention, the first image data and/or the second image data may be stereoscopic image data, and the image projecting unit may project a projection image including a stereoscopic image.

The information presentation apparatus according to the present invention may include a communication unit that communicates with a server, wherein the communication unit receives at least one of the first image data, the second image data, display object region data to set the display object region and the drawn projection image from the server to allow the image projecting unit to project the projection image.

### ADVANTAGEOUS EFFECTS OF INVENTION

The information presentation apparatus according to the present invention can project the second image on the display object in the information provision region, and can project the first image on the information provision region other than the display object. Therefore, the information presentation apparatus can project the first image and the second image simultaneously from one image projecting unit, and can project different images both on the display object and on the frame for displaying the display obj ect.

### BRIEF DESCRIPTION OF DRAWINGS

[Fig. 1] Fig. 1 is a block diagram showing a configuration of an information presentation apparatus shown as a first embodiment of the present invention.
[Fig. 2] Fig. 2 is a perspective view showing a display frame in the information presentation apparatus shown as the first embodiment of the present invention. Fig. 2(a) is a display frame provided with a display surface below an information surface, Fig. 2(b) is a display frame provided with display surfaces on an information surface to place display objects against the information surface, and Fig. 2(c) is a display frame provided with a ceiling above an information surface and a display surface hanging from the ceiling.
[Fig. 3] Fig. 3 is a perspective view showing an environment for projecting images in the information presentation apparatus shown as the first embodiment of the present invention.
[Fig. 4] Fig. 4 is a perspective view showing a state of projecting a display object image and an information provision image in the information presentation apparatus shown as the first embodiment of the present invention.
[Fig. 5] Fig. 5 is a view showing a projection image generated by an image control device in the information presentation apparatus shown as the first embodiment of the present invention.
[Fig. 6] Fig. 6 is a view showing an information provision image, a display object image and display object region data in the information presentation apparatus shown as the first embodiment of the present invention. Fig. 6(a) is information provision image data as an information provision image, Fig. 6(b) is display object image data as a display object image, Fig. 6(c) is display object region data specifying a display object region, and Fig. 6(d) is projection image data.
[Fig. 7] Fig. 7 is a view showing CAD data of a display object in the information presentation apparatus shown as the first embodiment of the present invention.
[Fig. 8] Fig. 8 is a view showing one example in which a vehicle-shaped white model is used as a display object and a back wall is used as an information provision region in the information presentation apparatus shown as the first embodiment of the present invention.

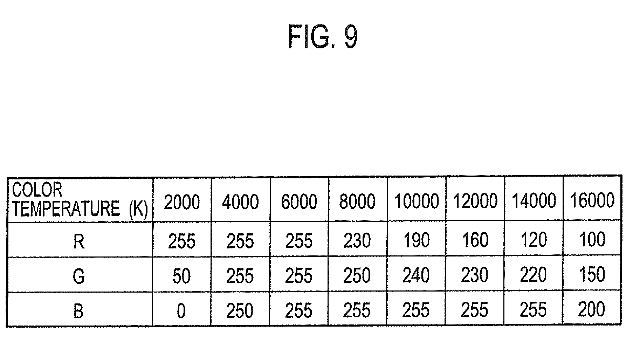

[Fig. 9] Fig. 9 is a chart showing a conversion table to convert color temperature into RGB data values of CG images in an information presentation apparatus shown as a second embodiment of the present invention.
[Fig. 10] Fig. 10 is a block diagram showing a configuration of an information presentation apparatus shown as a third embodiment of the present invention.
[Fig. 11] Fig. 11 is a perspective view showing an environment for projecting images in the information presentation apparatus shown as the third embodiment of the present invention.
[Fig. 12] Fig. 12 is a view showing one example of a projection image in the information presentation apparatus shown as the third embodiment of the present invention.
[Fig. 13] Fig. 13 is a perspective view showing a state of projecting the projection image of Fig. 12 in the information presentation apparatus shown as the third embodiment of the present invention.
[Fig. 14] Fig. 14 is a perspective view illustrating a state of imaging the state in Fig. 13 in the information presentation apparatus shown as the third embodiment of the present invention.
[Fig. 15] Fig. 15 is a block diagram showing a configuration of an information presentation apparatus shown as a fourth embodiment of the present invention.
[Fig. 16] Fig. 16 is a perspective view showing a state of projecting a display object image and an information provision image in the information presentation apparatus shown as the fourth embodiment of the present invention.
[Fig. 17] Fig. 17 is a view showing one example of a projection image in the information presentation apparatus shown as the fourth embodiment of the present invention.
[Fig. 18] Fig. 18 is a view showing an information provision image, a display object image and display object region data in the information presentation apparatus shown as the fourth embodiment of the present invention. Fig. 18(a) is an information provision image, Fig. 18(b) is a display object image, Fig. 18(c) is display object region data, Fig. 18(d) is an image adjusted to one including a display object region, and Fig. 18(e) is a projection image.
[Fig. 19] Fig. 19 is a block diagram showing a configuration of an information presentation apparatus shown as a fifth embodiment of the present invention.
[Fig. 20] Fig. 20 is a perspective view showing a state of projecting a display object image and an information provision image in the information presentation apparatus shown as the fifth embodiment of the present invention.
[Fig. 21] Fig. 21 is a view showing one example of a projection image in the information presentation apparatus shown as the fifth embodiment of the present invention.
[Fig. 22] Fig. 22 is a view showing an information provision image, a display object image and display object region data in the information presentation apparatus shown as the fifth embodiment of the present invention. Fig. 22(a) is an information provision image, Fig. 22(b) is a display object image, Fig. 22(c) is display object region data, Fig. 22(d) is an image including gradation portions, and Fig. 22(e) is a projection image.
[Fig. 23] Fig. 23 is a block diagram showing a configuration of an information presentation apparatus shown as a sixth embodiment of the present invention.
[Fig. 24] Fig. 24 is a perspective view showing a state of projecting a mask image, a display object image and an information provision image in the information presentation apparatus shown as the sixth embodiment of the present invention.
[Fig. 25] Fig. 25 is a view showing one example of a projection image in the information presentation apparatus shown as the sixth embodiment of the present invention.
[Fig. 26] Fig. 26 is a view showing an information provision image, a display object image and display object region data in the information presentation apparatus shown as the sixth embodiment of the present invention. Fig. 26(a) is an information provision image, Fig. 26(b) is a display object image, Fig. 26(c) is a mask image, Fig. 26(d) is a display object region, and Fig. 26(e) is a projection image.
[Fig. 27] Fig. 27 is a view showing CAD data of a display frame in the information presentation apparatus shown as the sixth embodiment of the present invention.
[Fig. 28] Fig. 28 is a block diagram showing a configuration of an information presentation apparatus shown as a seventh embodiment of the present invention.
[Fig. 29] Fig. 29 is a view showing an eye-point position, a viewing angle and a distance of a user with respect to a flat object to be irradiated in a lighting system shown as the seventh embodiment of the present invention.
[Fig. 30] Fig. 30 is a view illustrating a video visually recognized by a user when the user views a flat information surface in an information provision system shown as the seventh embodiment of the present invention. Fig. 30(a) shows a relationship among an eye point, an image surface and an information surface, and Fig 30(b) is a projected planar image.
[Fig. 31] Fig. 31 is a view showing a projection position, a projection angle of field and a distance of an image projecting unit with respect to a flat information surface in the information provision system shown as the seventh embodiment of the present invention.
[Fig. 32] Fig. 32 is a view illustrating a state of projecting light on the flat information surface from the image projecting unit in the information provision system shown as the seventh embodiment of the present invention. Fig. 32(a) shows a relationship among the image projecting unit, the image surface and the information surface, and Fig 32(b) is a projected planar image.
[Fig. 33] Fig. 33 is a view illustrating a video visually recognized by a user when the user views an L-shaped information surface in an information provision system shown as the seventh embodiment of the present invention. Fig. 33(a) shows a relationship among the eye point, the image surface and the information surface, and
Fig 33(b) is a projected planar image.
[Fig. 34] Fig. 34 is a view illustrating a state of projecting light on an L-shaped display frame from the image projecting unit in the information provision system shown as the seventh embodiment of the present invention. Fig. 34(a) shows a relationship among the image projecting unit, the image surface and the information surface, and Fig 34(b) is a projected planar image.
[Fig. 35] Fig. 35 is a block diagram showing a configuration of an information presentation apparatus shown as an eighth embodiment of the present invention.
[Fig. 36] Fig. 36 is a block diagram showing a configuration of an information presentation apparatus shown as a ninth embodiment of the present invention.
[Fig. 37] Fig. 37 is a block diagram showing a configuration of an information presentation apparatus shown as a tenth embodiment of the present invention.
[Fig. 38] Fig. 38 is a block diagram showing a configuration of an information presentation apparatus shown as a twelfth embodiment of the present invention.
[Fig. 39] Fig. 39 is a perspective view showing a state of mounting an image projecting unit, a mirror and the like on a display frame of an information presentation apparatus shown as a thirteenth embodiment of the present invention.
[Fig. 40] Fig. 40 is a perspective view showing a state of projecting a display object image and an information provision image in the information presentation apparatus shown as the thirteenth embodiment of the present invention.
[Fig. 41] Fig. 41 is a perspective view of an information presentation apparatus shown as a fourteenth embodiment of the present invention.
[Fig. 42] Fig. 42 is a block diagram showing a configuration of the information presentation apparatus shown as the fourteenth embodiment of the present invention.
[Fig. 43] Fig. 43 is a perspective view showing a state of projecting a display object image and an information provision image in the information presentation apparatus shown as the fourteenth embodiment of the present invention.
[Fig. 44] Fig. 44 is a block diagram showing a configuration of an information presentation apparatus shown as a sixteenth embodiment of the present invention.
[Fig. 45] Fig. 45 is a block diagram showing a configuration of the information presentation apparatus shown as the sixteenth embodiment of the present invention.
[Fig. 46] Fig. 46 is a block diagram showing a configuration of the information presentation apparatus shown as the sixteenth embodiment of the present invention.

### DESCRIPTION OF EMBODIMENTS

Hereinafter, embodiments of the present invention will be explained with reference to the drawings.

### [First embodiment]

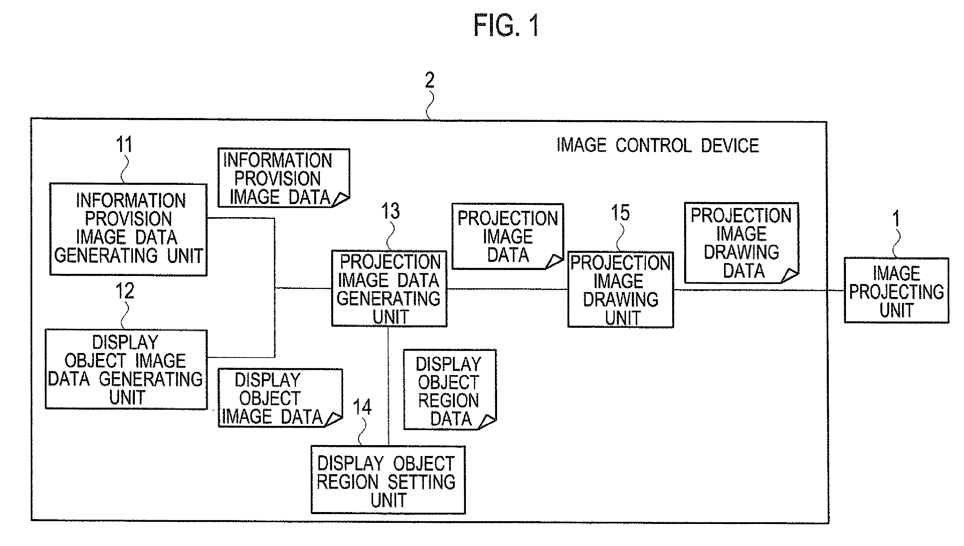

The present invention is applied to, for example, an information presentation apparatus having a configuration as shown in Fig. 1 as a first embodiment. The information presentation apparatus is functionally composed of an image projecting unit 1 such as a projector and an image control device 2 such as a personal computer. The information presentation apparatus projects images onto a display object and other regions other than the display object. The display object as used herein is any object that can be displayed, such as a three-dimensional commercial product and a model thereof, and a plate having an arbitrary concave-convex shape.

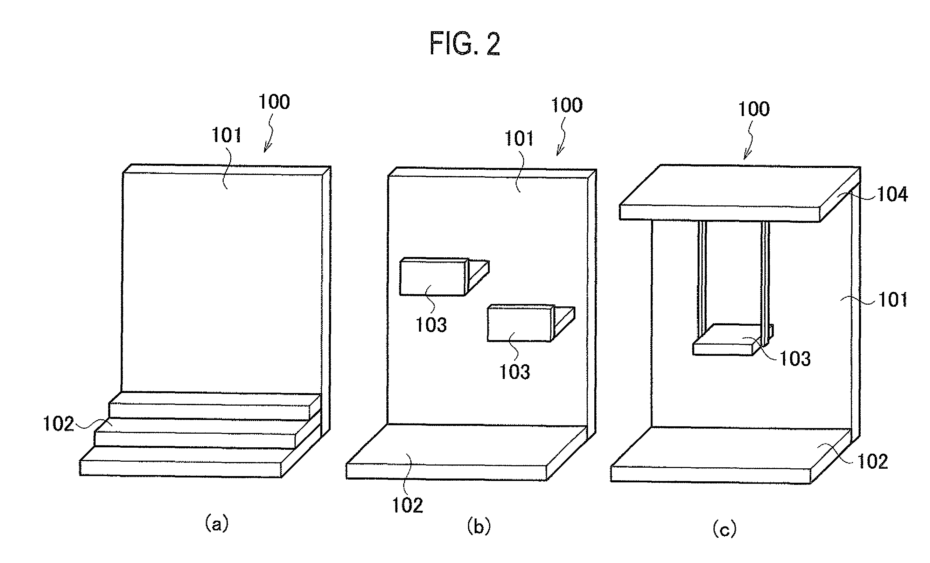

The information presentation apparatus includes a display frame 100 having an information surface 101 and a display surface 102 for a display object as shown in Fig. 2. The display frame 100 shown in Fig. 2(a) is provided with the display surface 102 having plural steps located below the wide information surface 101. The display frame 100 shown in Fig. 2(b) is provided with display surfaces 103 on the information surface 101 to place display objects against the information surface 101. The display frame 100 shown in Fig. 2(c) is provided with a ceiling 104 above the information surface 101, and the display surface 103 hanging from the ceiling 104. The information presentation apparatus projects an image on the display object placed on the display surface 103 and also projects an image on a region other than the display object, even in the case of the display frame 100 shown in Fig. 2.

The image control device 2 includes an information provision image data generating unit 11, a display object image data generating unit 12, a display object region setting unit 14, a projection image data generating unit 13 and a projection image drawing unit 15.

The information provision image data generating unit 11 generates information provision image data for projecting an information provision image having an arbitrary content on an information provision region including at least part of a region in which a display object is present.

The display object image data generating unit 12 generates display object image data for projecting a display object image on the display object.

The information provision image and the display object image described above include still images and moving images. Examples of the information provision image and the display object image include a text image (characters), a CG image generated by a PC or the like, and a photographed image taken with a camera. An image composed of a single color is included in the CG image. The information provision image is a first image including arbitrary presentation information with respect to the information provision region including at least part of a region in which the display object is present. The display object image is a second image for projecting an arbitrary image on the display object.

The display object region setting unit 14 sets a display object region in which the display object is present in the information provision region.

The projection image data generating unit 13 generates projection image data by synthesizing the information provision image data generated by the information provision image data generating unit 11 and the display object image data generated by the display object image data generating unit 12. In the projection image data, the display object image data is positioned in a range determined according to the display object region data set by the display object region setting unit 14, and the information provision image data is positioned in the other range.

The projection image drawing unit 15 draws the projection image data generated by the projection image data generating unit 13. The projection image drawing data generated by the projection image drawing unit 15 is then supplied to the image projecting unit 1. Accordingly, the image projecting unit 1 can project the display object image on the display object, and project the information provision image on the other information provision region.

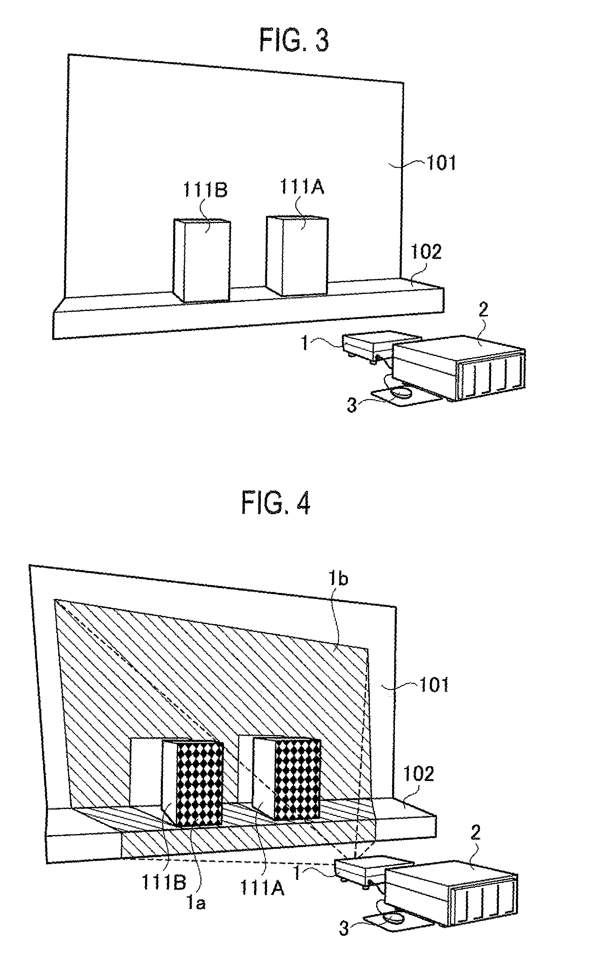

In the information presentation apparatus, the image projecting unit I is a projector. The image projecting unit 1 is placed in such a manner that the range including at least part of the range in which display objects 111A and 111B (hereinafter, collectively referred to as a "display object 111") are present is to be a projection range. In Fig. 3, the reference numeral 3 is an operation unit such as a mouse operated by a user.

In the above-described environment, the projection range specified by the image projecting unit 1 is "the information provision region". Thus, the image projecting unit 1 projects an image on the information provision region. In particular, as shown in Fig. 4, the image projecting unit 1 can project a single color image indicated by diagonal lines in the figure as an information provision image 1b on the entire projection range of the image projecting unit 1, and project a grid-like display object image 1a on the respective display objects 111A and 111B. In order to carry out the above-described image projection, the information provision image data generating unit 11 and the display object image data generating unit 12 may generate the information provision image and the display object image by use of an existing image generation tool, or may store the preliminarily generated images to retrieve the stored images at the time of image projecting.

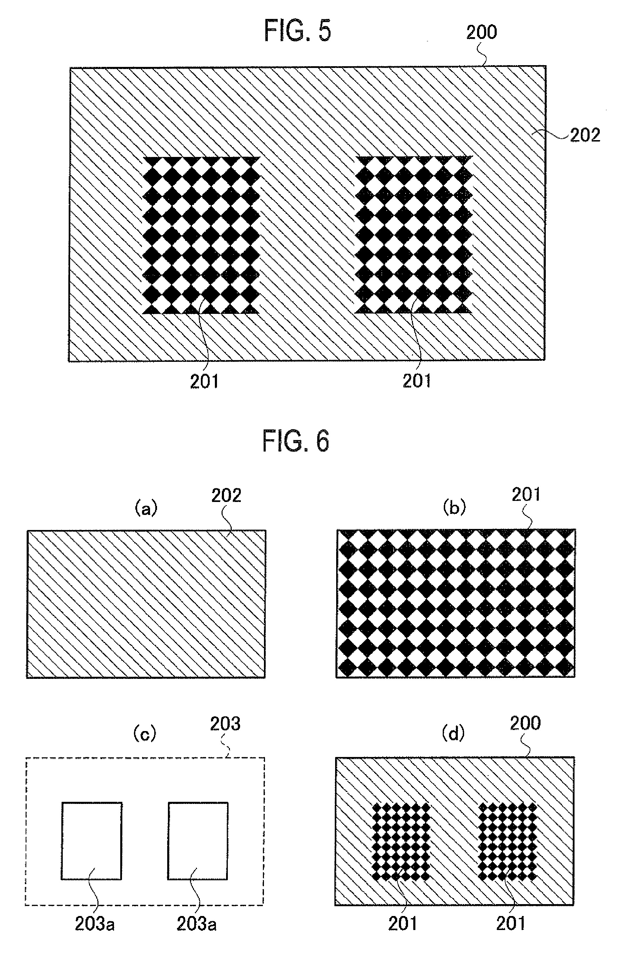

For example, when the image projecting unit 1 faces the display object 111 and the information surface 101, the information presentation apparatus can generate an projection image 200 shown in Fig. 5. The projection image 200 is obtained by synthesizing information provision image data 202 (hereinafter, also referred to as an information provision image 202) as the information provision image 1b shown in Fig. 6(a) and display object image data 210 (hereinafter, also referred to as a display object image 201) as the display object image 1a shown in Fig. 6(b) by using display object region data 203 that specifies display object regions 203a shown in Fig. 6(c) to generate the projection image data 200 shown in Fig. 6(d).

In the information presentation apparatus, the display object region setting unit 14 sets only the display objects 111A and 111B in the projection region of the image projecting unit 1 as the display object region, and sets the other information surface 101 as the information provision region. For example, the display object region setting unit 14 may input an arbitrary range within the information provision region in accordance with the operation of the operation unit 3 by a user. In this case, the display object region setting unit 14 detects the operation of the operation unit 3, and supplies the display object region data to the projection image data generating unit 13 every time the display object region setting unit 14 recognizes the update of the display object region, thereby updating the display object image. Accordingly, the display object region setting unit 14 can allow the user to set the display object region while visually recognizing the display object region.

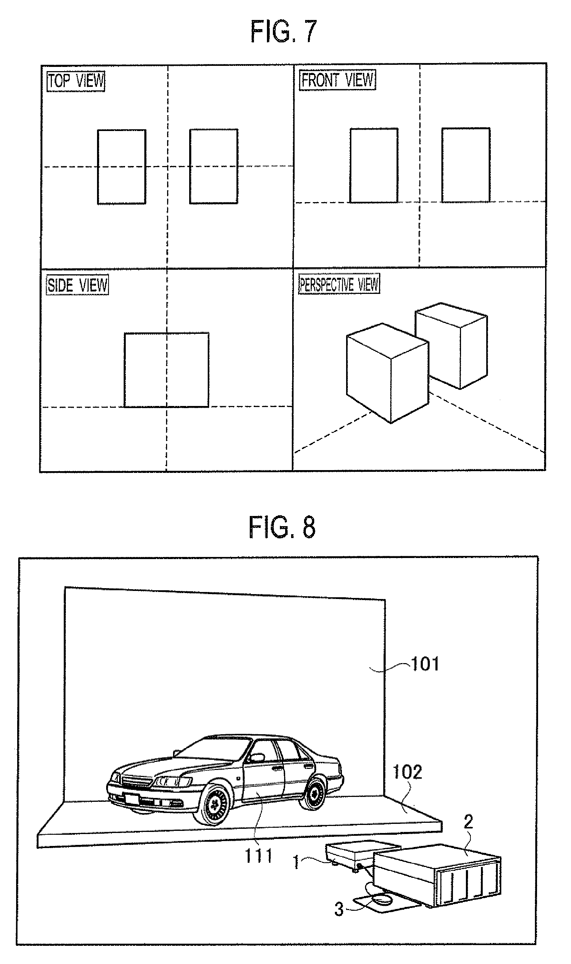

In addition, when a three-dimensional shape of the display object 111 as shown in Fig. 7 is specified by CAD data or a three-dimensional measuring device, the display object region setting unit 14 may set the display object region according to the three-dimensional shape. Even when there are plural display objects 111, the display object region setting unit 14 can also specify the location of the respective display objects 111 by the CAD data or the three-dimensional measuring device. Then, the display object region setting unit 14 may simulate the display object region in the projection range of the image projecting unit 1 by using three-dimensional data based on the relationship of the position/attitude of each display object 111 in a three-dimensional direction and the image projecting unit 1, a projection angle of field, a back focal length, an optical axis angle and a shift amount of the image projecting unit 1.

Further, the display object region setting unit 14 may detect environmental changes in the display frame 100 by using a sensor function such as a temperature sensor and an optical sensor, so as to extract the display object region according to a threshold value of the detection result. Thus, the display object region setting unit 14 may set the display object region by the method not reflecting an intention of the user.

Accordingly, the information presentation apparatus can generate the projection image data by synthesizing the information provision image data and the display object image data so as to project the display object image 1a on the display object region set within the information provision region, and project the information provision image 1b on the remaining information provision region.

As described in detail above, the information presentation apparatus shown as the first embodiment of the present invention can project the display object image 1a on the display object 111 within the information provision region, and project the information provision image 1b on the information provision region other than the display object 111. Therefore, the information presentation apparatus can concurrently project the display object image 1a and the information provision image 1b from one image projecting unit 1, and can project the different images both on the display object 111 and on the frame for displaying the display object 111, respectively.

In addition, the information presentation apparatus generates the display object image 1a as an image composed of a distinct color such as red and iridescent color, so as to exert a highlight effect on the display object region with respect to the other region.

Moreover, the information presentation apparatus generates the display object image 1a as a black image, so as to have an effect in projecting the information provision image 1b not on the display object 111 but only on the other region (the information provision region).

Furthermore, the information presentation apparatus generate the display object image 1a as an image identical with the information provision image 1b, so as to have a disappearing effect (a chameleon effect) of the display object 111 into the information provision image 1b.

As a specific usage example, as shown in Fig. 8, the information presentation apparatus uses a vehicle-shaped white model as the display object 111, and uses a back wall as the information provision region, thereby projecting an image as described below.

In the first step, the information presentation apparatus projects the information provision image 1b of a vehicle driving on a road onto the information provision region, and projects the display object image 1a of scenery onto the display object region. Thus, the information presentation apparatus can produce a situation in which a vehicle 111 runs.

In the second step, the information presentation apparatus projects the information provision image 1b representing seasons or locations onto the information provision region, and projects the display object image 1a representing colors or designs of the vehicle 111 onto the display object region. Accordingly, making a selection of a color or design becomes easier when purchasing the vehicle 111.

In the third step, the information presentation apparatus projects the information provision image 1b representing a promotional video (PV) of a commercial product onto the information provision region, and projects the display object image 1a of a black image onto the display object region. Thus, since there seems to be no image projected on the display object 111, the eyes of a viewer can be focused on the PV

In the fourth step, the information provision image 1b projected on the information provision region is identical with the display object image 1a projected on the display object region. Accordingly, the display object 111 and the information surface 101 exert a chameleon effect so that the display object 111 disappears in the information surface 101.

### [Second embodiment]

Next, an information presentation apparatus shown as a second embodiment will be explained. Note that, the same elements as in the first embodiment are indicated by the same reference numerals, and the specific explanations thereof will not be repeated.

The information presentation apparatus shown as the second embodiment has a function to apply illumination light to the display object region thereby illuminate the whole of or a part of the display object.

With regard to the display object image projected on the display object region, a conversion table in which specified color temperatures in illuminating are converted into false RGB values is preliminarily prepared. Then, a color temperature value in the conversion table may be input by the operation unit 3, so as to generate an image having a corresponding RGB value. For example, when 8000K (Kelvin) in the conversion table is selected as a color temperature for illumination in accordance with the operation of the operation unit 3 by a user, the information provision image data generating unit 11 and the display object image data generating unit 12 retrieve the RGB data value of the CG image corresponding to 8000K (Kelvin) from the conversion table. Thus, the information provision image data generating unit 11 and the display object image data generating unit 12 can generate information provision image data and display object image data of the retrieved RGB data value. Note that, the conversion table is obtained not by specifying particular objects to calculate the color temperatures, but by converting images of the color temperatures into the RGB data values of the CG images.

The information presentation apparatus can generate the display object image 1a as a single color image similar to illumination light. Therefore, the information presentation apparatus can have a similar effect in applying illumination light to the display object 111. In this embodiment, only by preparing the conversion table as shown in Fig. 5, the information presentation apparatus can obtain the RGB data value by allowing the user to select the color temperature of illumination projected on the display object 111. Accordingly, the information presentation apparatus can generate the display object image 1a similar to an image generated by a lighting instrument so as to project on the display object 111.

As a specific usage example, as shown in Fig. 8, the information presentation apparatus uses a vehicle-shaped white model as the display object 111, and uses a back wall as the information provision region, thereby projecting an image as described below.

The information presentation apparatus projects the information provision image 1b explaining the characteristics of the vehicle 111 onto the information surface 101 included in the information provision region. With respect to the vehicle 111, the information presentation apparatus projects an image of a part of the vehicle (such as a tire and a body), to which spotlight seems to be applied, corresponding to the information provision image 1b. Accordingly, the eyes of a viewer can be guided to the part of the vehicle 111 explained by the information provision image 1b.

In addition, the information presentation apparatus projects the information provision image 1b of a black image on the information provision region so as to produce a situation in which there seems to be no image projected on the information provision region, and projects the display object image 1a on the display object region to illuminate the entire display object 111. Accordingly, the eyes of the viewer can be focused on the display object 111.

In the second embodiment, plural models of commercial products, interior models of shops or dioramas of cities may be placed on the display surface 102 as the display object 111, on which an image to apply spotlight to a specified position is projected as the display object image 1a. In addition, the explanation corresponding to the display object image 1a may be projected as the information provision image 1b concurrently.

### [Third embodiment]

Next, an information presentation apparatus shown as a third embodiment will be explained. Note that, the same elements as in the above-described embodiments are indicated by the same reference numerals, and the specific explanations thereof will not be repeated.

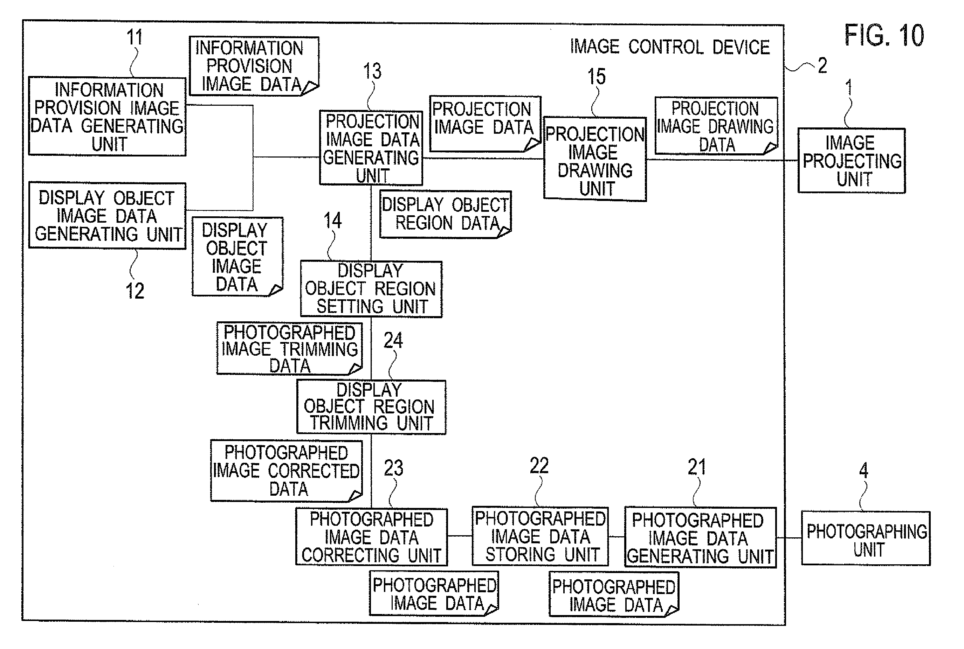

The information presentation apparatus shown as the third embodiment further includes a photographing unit 4 as shown in Fig. 10. In addition, the information presentation apparatus includes a photographed image data generating unit 21, a photographed image data storing unit 22, a photographed image data correcting unit 23 and a display object region trimming unit 24, which are provided in the image control device 2. The information presentation apparatus sets the region specified by the display object region trimming unit 24 as the display object region by using the display object region setting unit 14.

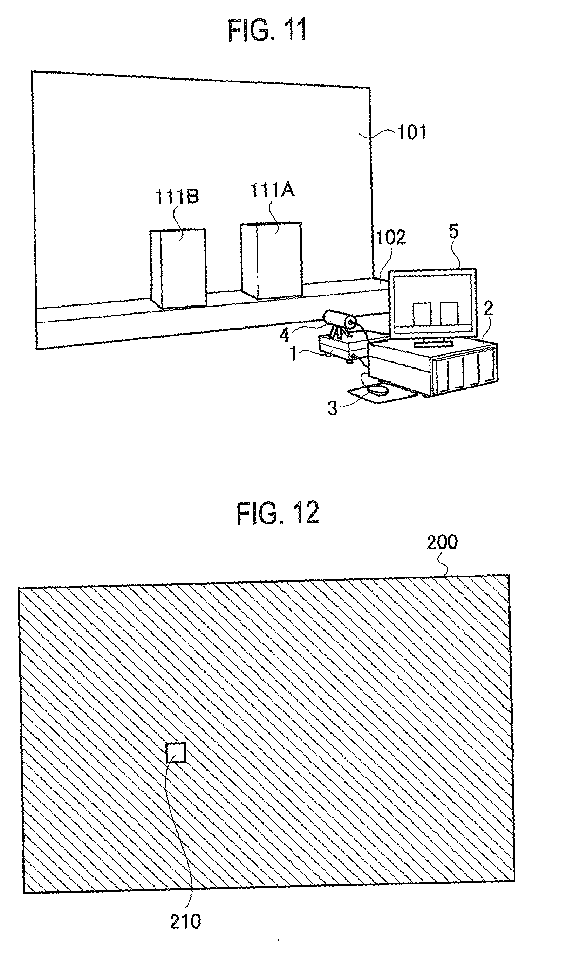

For example, the photographing unit 4 is placed in a position to photograph the information provision region as shown in Fig. 11. The photographing unit 4 outputs a photographed image signal including the information surface 101, the display surface 102 and the display object 111 to the photographed image data generating unit 21.

The photographed image data generating unit 21 is composed of an I/O interface for the photographing unit 4. The photographed image data generating unit 21 converts the photographed image signal output from the photographing unit 4 into a processable data format to generate photographed image data, and then supplies the data to the photographed image data storing unit 22.

The photographed image data storing unit 22 is composed of, for example, a hard disk device. The photographed image data storing unit 22 stores the photographed image data generated by the photographed image data generating unit 21. The photographed image data stored in the photographed image data storing unit 22 may be output to a display 5 shown in Fig. 11 so that a photographing condition by the photographing unit 4 is visually recognizable.

The photographed image data correcting unit 23 corrects the photographed image data in such a manner that the photographed image photographed by the photographing unit 4 corresponds to a projected image to be projected by the image projecting unit 1. Firstly, the photographed image data correcting unit 23 allows the image projecting unit 1 to project the original photographed image photographed by the photographing unit 4, and then obtains the photographed image in a state of irradiating the display object 111. In this case, the light representing the display object 111 is projected at the position shifting from the actual display object 111 if the photographed image is directly projected because the position of the image projecting unit 1 differs from the position of the photographing unit 4. Therefore, the photographed image data correcting unit 23 visually recognizes the gap between the actual display object 111 and the light representing the display object 111, and corrects the position of the display object 111 in the photographed image in such a manner that the light representing the display object 111 corresponds to the actual display object 111. Accordingly, the light representing the display object 111 projected from the image projecting unit 1 is corrected due to the correction including a positional shift conversion in vertical and horizontal directions, a trapezoidal correction conversion, a size conversion and a rotation conversion of the photographed image. When the light representing the display object 111 corresponds to the display object 111 due to the correction of the photographed image, the display object 111 within the photographed image after the correction becomes the display object region. Then, the photographed image data correcting unit 23 supplies the photographed image corrected data to the display object region trimming unit 24.

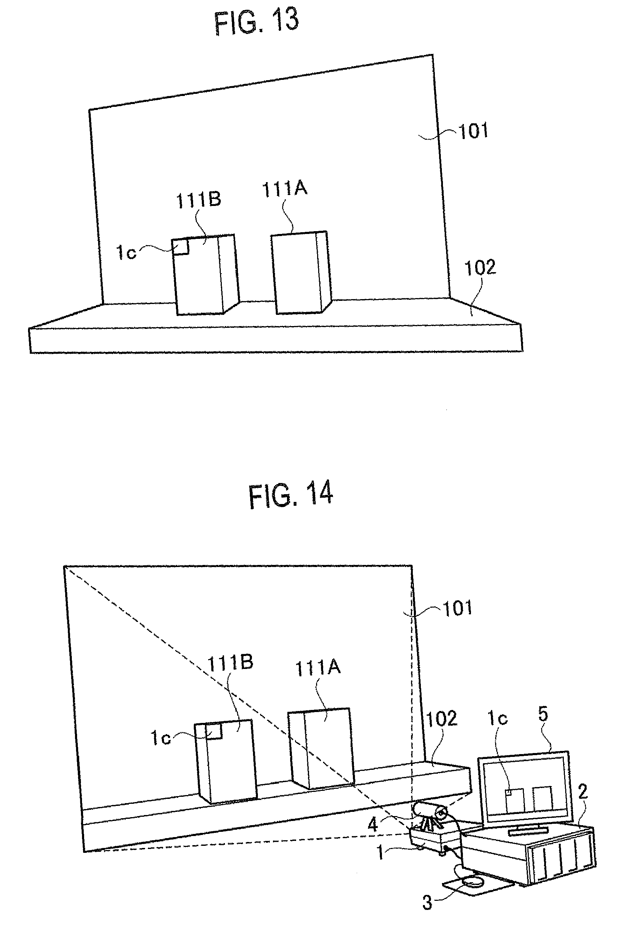

For example, when the photographed image data correcting unit 23 projects the projection image 200 including a colored portion 210 preliminarily placed at a specific pixel position in the project image 200 as shown in Fig. 12, a colored portion 1c is projected on the display object 111B as shown in Fig. 13. Then, the photographed image data correcting unit 23 photographs the condition in which the colored portion 1c is projected on the display object 111B as shown in Fig. 14 so as to obtain the photographed image including the colored portion 1c. Thus, the relationship between the position of the projection image 200 including the colored portion 210 and the position of the photographed image including the colored portion 1c is obtained. By repeating this operation several times, the photographed image data correcting unit 23 can create a conversion table representing the relationship between the projection image and the photographed image. In the conversion table, the image in which the pixel position of the photographed image data is converted in the reverse direction corresponds to the projection image.

With regard to the relationship between the projection image and the photographed image, the correspondence relationship of the pixel position may be detected for each pixel, may be detected using a group or line of a certain number of unified pixels, or may be detected for discretely located pixels and then subjected to pixel interpolation.

The display object region trimming unit 24 specifies a part corresponding to the display object region from the corrected photographed image data generated by the photographed image data correcting unit 23. As an example of the trimming method, the display object region trimming unit 24 recognizes an arbitrary display object region according to the operation by a user, and writes the recognized display object region directly on the photographed image, thereby specifying the display object region. The display object region trimming unit 24 may also provide a blue background behind the display object 111 to extract the display object region representing the display object 111. Further, the display object region trimming unit 24 may project phase images both in a state of not displaying the display object 111 and in a state of displaying the display object 111 from the projecting unit, so as to extract the display object region by a phase difference method based on the photographed images in each projection state.

In particular, the display object region trimming unit 24 performs an operation to project and photograph a fringe pattern of which luminosity varies periodically in a direction perpendicular to the lighting direction of the image projecting unit 1 in a state in which the display object 111 is not present in the information provision region, so as to generate a first phase image by a phase difference method. In addition, the display object region trimming unit 24 performs an operation to project and photograph a fringe pattern of which luminosity periodically varies in a direction perpendicular to the lighting direction of the image projecting unit 1 in a state in which the display object 111 is present in the information provision region, so as to generate a second phase image by a phase difference method. Then, the image in which the phase is shifted by an equivalent dimension to the display object 111 that is a three-dimensional object is obtained between the first phase image and the second phase image. Therefore, the region on the image in which the phase difference between the first phase image and the second phase image is a predetermined value or more can be specified as the display object region. Accordingly, the information presentation apparatus can perform the operation to specify the display object region not manually but automatically. In addition, the information presentation apparatus can finely and manually adjust the display object region obtained automatically.

Moreover, the display object region trimming unit 24 may perform correction processing of the display object region by the photographed image data correcting unit 23 after the trimming of the display object region from the photographed image data, in addition to the trimming method of the display object region from the photographed image data corrected by the photographed image data correcting unit 23.

As described above, the information presentation apparatus can easily separate the display object region from the information provision region by use of the photographing unit 4.

In addition, the information presentation apparatus updates automatic specifying processing for the display object region at certain time intervals, so as to allow the display object region to comply with changes with time such as a shift and a shape change of the display object 111. In other words, according to the configuration of the information presentation apparatus, the display object region trimming unit 24 detects the changes with time including a shift or a shape change of the display object 111 so as to change the display object region in response to the changes of the display object 111 detected by the display object region trimming unit 24. Then, the display object region setting unit 14 projects an image or illumination light on the changed display object region.

### [Fourth embodiment]

Next, an information presentation apparatus shown as a fourth embodiment will be explained. Note that, the same elements as in the above-described embodiments are indicated by the same reference numerals, and the specific explanations thereof will not be repeated.

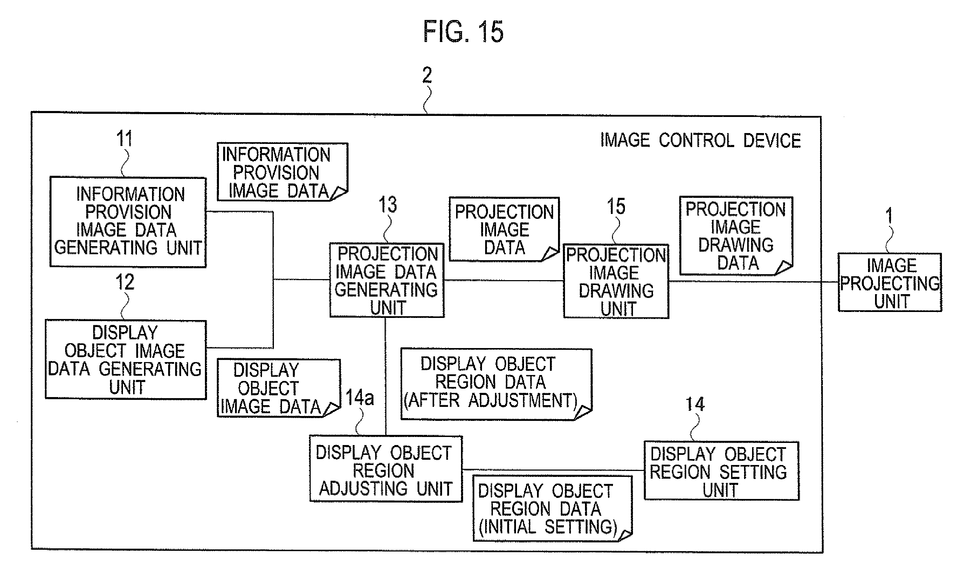

The image control device 2 of the information presentation apparatus shown as the fourth embodiment includes a display object region adjusting unit 14a to adjust a position and a form of the display object region set by the display object region setting unit 14, as shown in Fig. 15.

The display object region adjusting unit 14a has several processing functions such as a configuration modification including a horizontal shift, rotation shift, transformation and scale change, an addition of a specified range, and a deletion of a specified range with respect to the display object region set by the display object region setting unit 14.

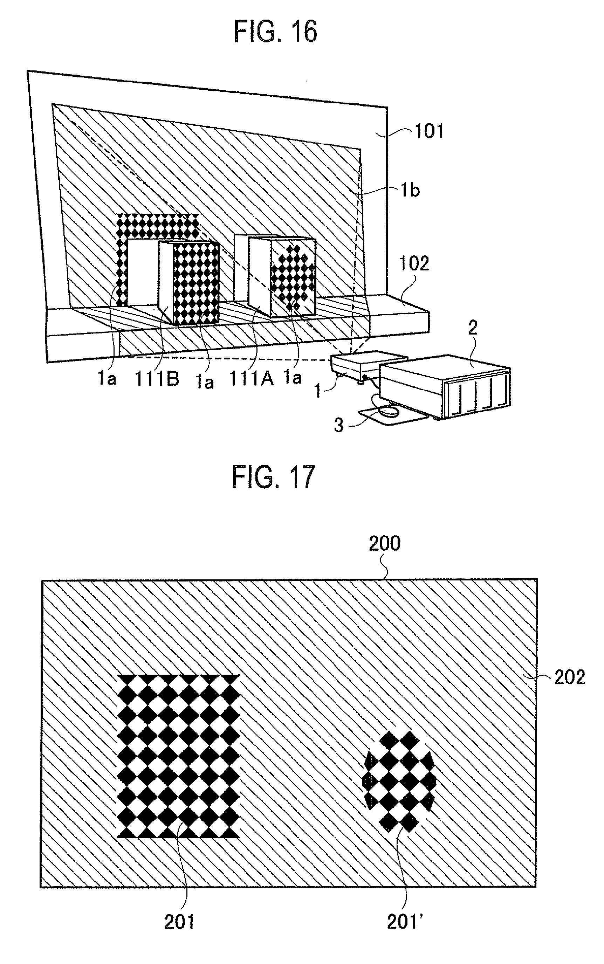

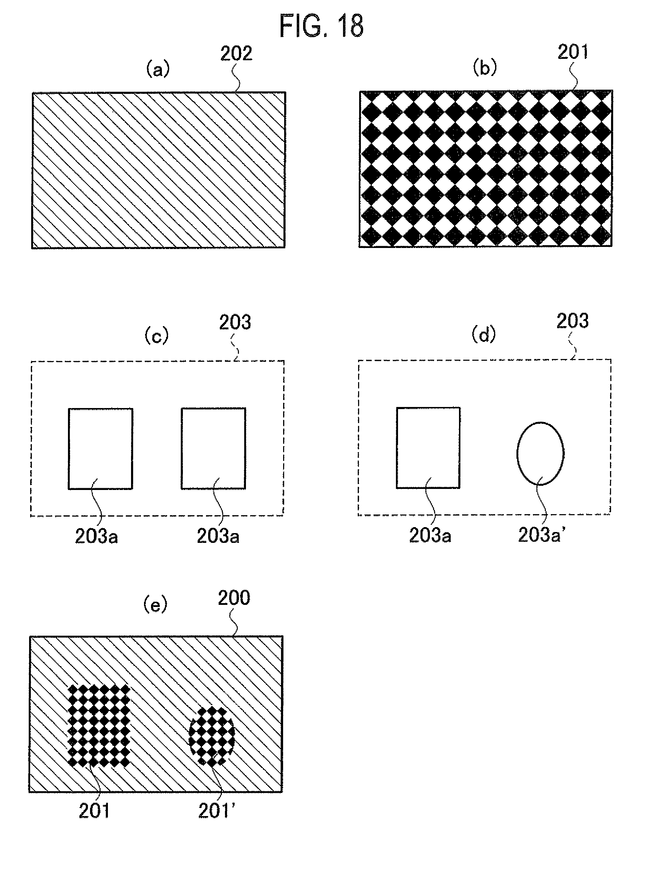

In particular, in the case of projecting the display object image 1a larger than the display object 111 and projecting the display object image 1a having a circular shape on an arbitrary surface of the display object 111 as shown in Fig. 16, the display object region adjusting unit 14a adjusts the display object region. Thus, the display object region adjusting unit 14a can obtain the projection image 200 by synthesizing an enlarged display object image 201' having a rectangular shape, a circularly-deformed display object image 201' and the information provision image 202, as shown in Fig. 17. When the information provision image 202 as the information provision image 1b shown in Fig. 18(a) and the display object image 201 shown in Fig. 18(b) are synthesized to generate the projection image 200 shown in Fig. 18(e), the display object region data 203 shown in Fig. 18(c) is adjusted to include the display object region 203a shown in Fig. 18(d). Therefore, the shape of Fig. 18(b) can be adjusted to fit the shape of the display object region 203a.

In particular, the display object region adjusting unit 14a modifies the boundary of the display object region according to the operation by a user. For example, the display object region adjusting unit 14a includes a pen, a liquid crystal panel, a keyboard operated by the user and an input interface to recognize the operation of the keyboard. When the display object region adjusting unit 14a adjusts the display object region, the display object region adjusting unit 14a displays the display object region set by the display object region setting unit 14. Then, the display object region adjusting unit 14a recognizes the operation for changing the display object region by the user using the pen composing the display object region adjusting unit 14a. In this case, the display object region adjusting unit 14a draws the resultant display object region in real time, and then outputs from the image projecting unit 1. Accordingly, the user can adjust the display object region while conforming the projection condition of the display object image 1a.

Therefore, the display object region adjusting unit 14a adjusts the display object region as follows.

First, a horizontal shift, a rotation shift and a configuration modification (scale change) can be carried out.

The display object region adjusting unit 14a inputs an amount of change of the horizontal shift, the rotation shift and the scale change by the operation unit 3 such as a keyboard and a mouse based on the current display object region set by the display object region setting unit 14, and simulates the changes of the display object region corresponding to the amount of change by the operation unit 3 by use of an image processing technology. Then, the display object region adjusting unit 14a replaces the current display object region to set a new display object region as a result of the simulation. In this case, the amount of change of the display object region by the operation unit 3 may vary within a preliminarily specified number range, or may be input directly as a number.

Second, a configuration modification (transformation) can be carried out.

The display object region adjusting unit 14a may detect the operation of the operation unit 3 such as a keyboard and a mouse by the user with respect to the current display object region set by the display object region adjusting unit 14, so as to perform the scale change of the display object region in fluctuation ranges in horizontal and vertical directions. In addition, the display object region adjusting unit 14a may specify one point on the boundary of the inside and the outside of the display object region by the operation unit 3, and horizontally move the point according to the operation of the operation unit 3 to change the boundary configuration of the display object region.

Third, an addition of a specified range can be carried out.

The display object region adjusting unit 14a can detect the operation of the operation unit 3 such as a keyboard, a mouse and a stylus pen by the user with respect to the current display object region set by the display object region adjusting unit 14, so as to add a new display object region in addition to the current display object region. Therefore, the user can add and adjust a desired display object region with respect to the current display object region set by the display object region adjusting unit 14.

Fourth, a deletion of a specified range can be carried out.

The display object region adjusting unit 14a can detect the operation of the operation unit 3 such as a keyboard, a mouse and a stylus pen by the user with respect to the current display object region set by the display object region adjusting unit 14, so as to delete a specified range from the current display object region to compose a new display object region.

As described above, in the information presentation apparatus according to the fourth embodiment, the display object region adjusting unit 14a can adjust the display object region according to the operation by the user or the like even after the display object region setting unit 14 sets the display object region. Accordingly, the information presentation apparatus can deal with arrangements reflecting an intention of the user such as a scale change of the display object image 1a and an addition or deletion of the display object image 1a depending on the display condition of the display object 111.

Further, according to the information presentation apparatus, even when the display object region setting unit 14 automatically sets the display object region, the display object region adjusting unit 14a can correct and efficiently set the display object region after the automatic setting. In particular, the information presentation apparatus can adjust a noise component of the display object region caused by the automatic setting, and a shift of the display object region and the configuration caused by the setup error of the image projecting unit 1 and the image control device 2.

### [Fifth embodiment]

Next, an information presentation apparatus shown as a fifth embodiment will be explained. Note that, the same elements as in the above-described embodiments are indicated by the same reference numerals, and the specific explanations thereof will not be repeated.

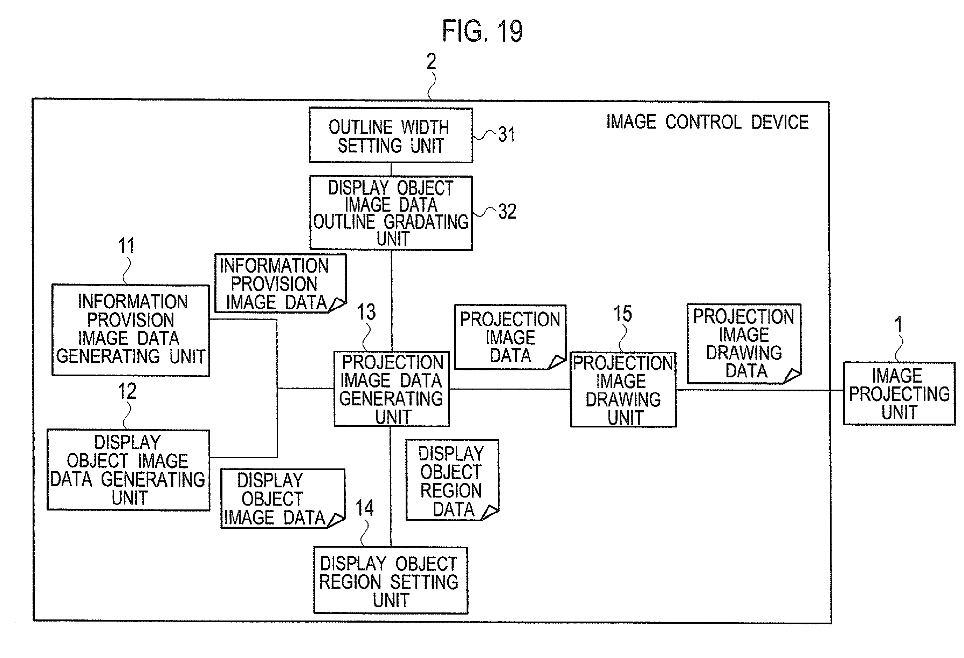

The image control device 2 of the information presentation apparatus shown as the fifth embodiment includes an outline width setting unit 31 to input an outline width of the display object region, and an outline gradating unit 32 to process data of the display object image 1a in such a manner that the pixel value in the outline width set by the outline width setting unit 31 gradually changes from the inside toward the outside, as shown in Fig. 19.

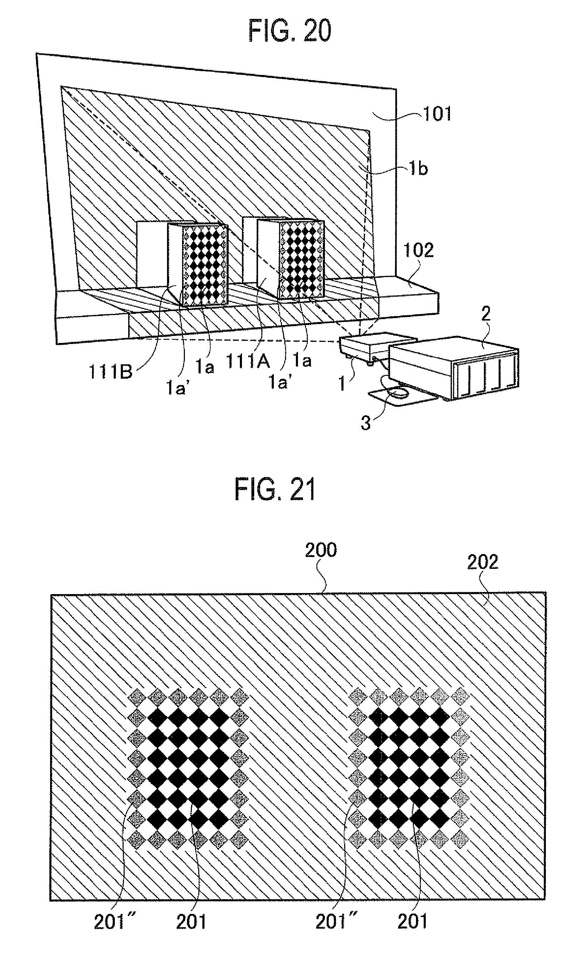

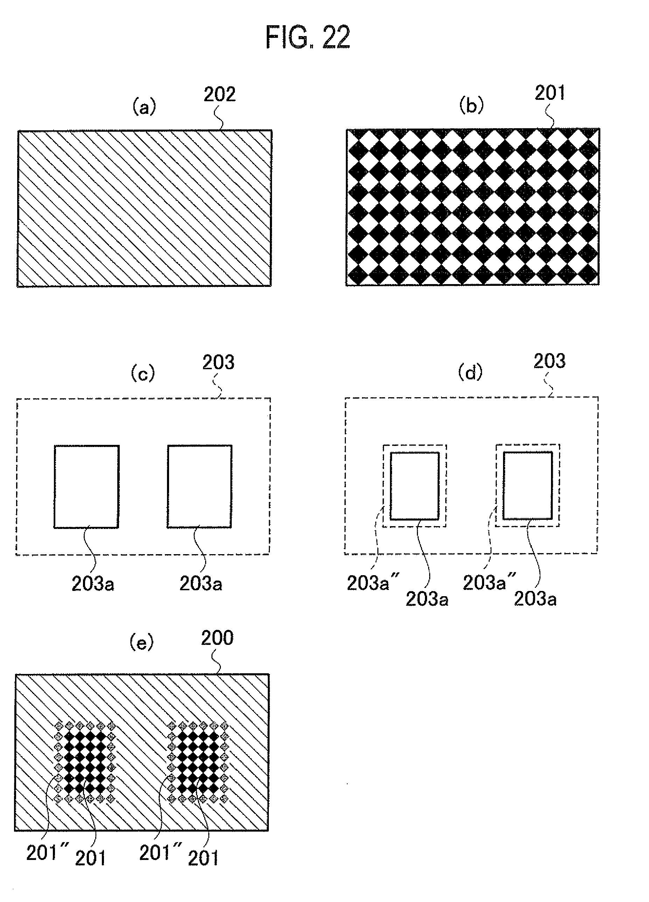

The information presentation apparatus shown in Fig. 20 gradates each outline of the display object images 1a projected on the display objects 111 compared with the central portion of the respective display object images 1a. As shown in Fig. 21, the projection image 200 has gradation portions 201" in each outline of the display object images 201. When the information provision image 202 as the information provision image 1b shown in Fig. 22(a) and the display object image 201 shown in Fig. 22(b) are synthesized to generate the projection image 200 shown in Fig. 22(e), the display object region data 203 shown in Fig. 22(c) is adjusted to include gradation portions 203a" shown in Fig. 22(d). Accordingly, the outline of the display object image 201 shown in Fig. 22(b) can be determined.

The outline setting unit 31 sets the outline width of the display object image 1a to be subjected to gradation treatment. For example, the outline setting unit 31 sets the outline width subjected to gradation treatment as the number of pixels from the outline of the display object region to the inside.

The outline gradating unit 32 gradates the display object image 201 of which the outline width is set by the outline width setting unit 31 by use of an arbitrary color specified by a user from the inside of the display object image 201 to the outside. The color of the gradation treatment may be determined by a specific RGB data value directly specified by the user, or may be determined by an automatically set RGB data value of the pixels in the outline on the information provision region side at the boundary between the display object region and the information provision region.

As described above, the information presentation apparatus shown as the fifth embodiment can exert the gradation effect on the outline of the display object image 1a so that the display object 111 looks illuminated. In particular, the information presentation apparatus gradates the outline of the display object image 1a in such a manner that the display object 111 is gradually darker in color from the inside of the display object 111 toward the outside. Thus, the information presentation apparatus changes luminance of the display object image 1a so as to bring the luminance close to the level of the illumination light.

In addition, the information presentation apparatus exerts an obscure effect on the display object image 1a projected from the image projecting unit 1 partly on the information provision region beyond the display object 111.

In other words, when the information presentation apparatus projects the display object image on the display object 111, the information presentation apparatus changes the outline of the display object image to gradate from the inside toward the outside within a predetermined width of the outline of the display object image 201. Therefore, the information presentation apparatus can obscure the leaked part of the display object image projected from the image projecting unit 1 on the information surface 101 outside the display object 111.

In particular, examples of the gradation effect to be changed in the outline of the display object image 1a include illuminance, luminance, luminous intensity, luminous flux, color temperature and color rendering property, in the case in which the display object image represents illumination light. The outline width setting unit 31 and the outline gradating unit 32 change the light illumination effect in the outline of the display object image 1a so as to obscure the leaked light outside the display object 111 even when projected on the information surface 101 of the background. For example, the outline gradating unit 32 obscures the leaked light from the display object 111 by reducing illuminance of the illumination light in the outline of the display object 111. In addition, the outline gradating unit 32 gradually reduces the projection region of the illumination light by increasing the outline width of the display object image 1a in which illuminance is set to zero, so as to gradually reduce the amount of the leaked light from the display object 111. Further, the outline gradating unit 32 may increase the outline width of the display object image 1a until the leaked light disappears. Note that, the outline of the display object image 1a set in order to decrease the amount of the leaked light is preferably determined according to the reduced area of the projection region of the illumination light.

### [Sixth embodiment]

Next, an information presentation apparatus shown as a sixth embodiment will be explained. Note that, the same elements as in the above-described embodiments are indicated by the same reference numerals, and the specific explanations thereof will not be repeated.

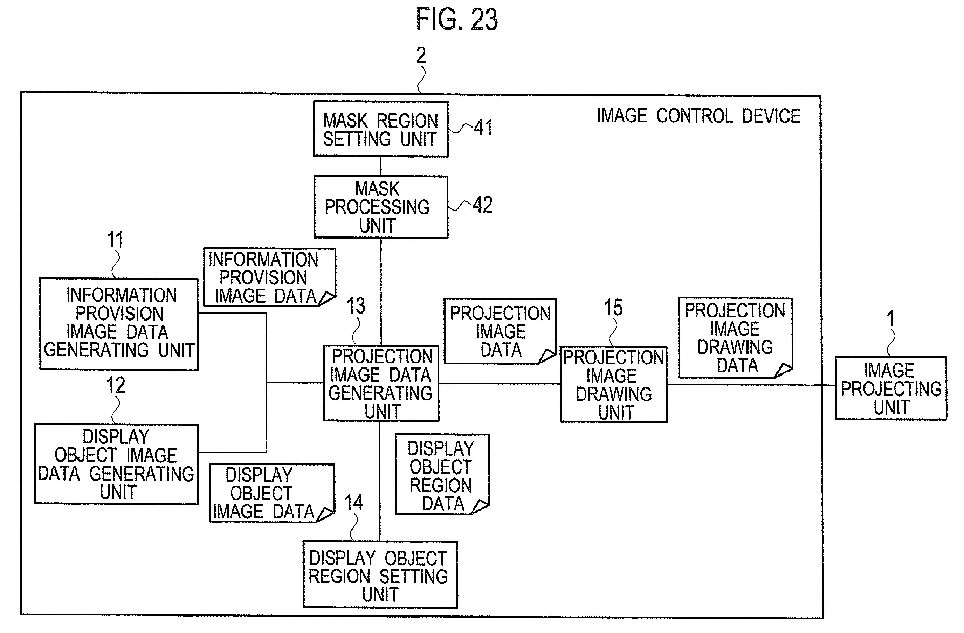

The image control device 2 of the information presentation apparatus shown as the sixth embodiment includes a mask region setting unit 41 to set a mask region covering the information provision region in an arbitrary state, and a mask processing unit 42 to correct the information provision image 1b to provide the mask region set by the mask region setting unit 41, as shown in Fig. 23.

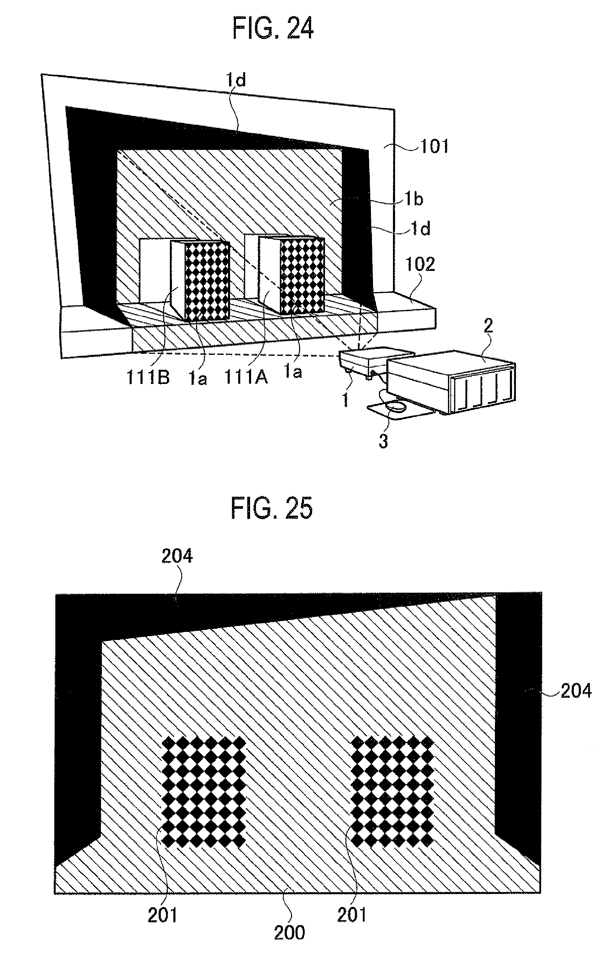

In particular, as shown in Fig. 24, the information presentation apparatus projects the display object image 1a and the information provision image 1b, and projects a mask image 1d to black out the periphery of the information provision image 1b. Due to the mask image 1d, the information presentation apparatus can change the shape of the information provision image 1b so that the information provision image 1b is visually obscured.

The mask region setting unit 41 sets the region not displaying the information provision image 1b in the information provision region as a mask region. With regard to the setting method of the mask region, the mask region setting unit 41 sets an arbitrary range within the information provision region as a mask region according to the operation of the operation unit 3 by a user. The mask processing unit 42 generates mask data corresponding to the mask region set by the mask region setting unit 41. When the mask region is set according to the operation by the user, the mask region setting unit 41 may set the mask region while projecting the image on the display object 111 from the image projection unit 1 by the mask processing unit 42 according to the operation by the user.

The mask data to black out the mask region generated by the mask processing unit 42 is supplied to the projection image data generating unit 13, so that the projection image data generating unit 13 corrects the image to black out the information provision image 1b according to the mask data.

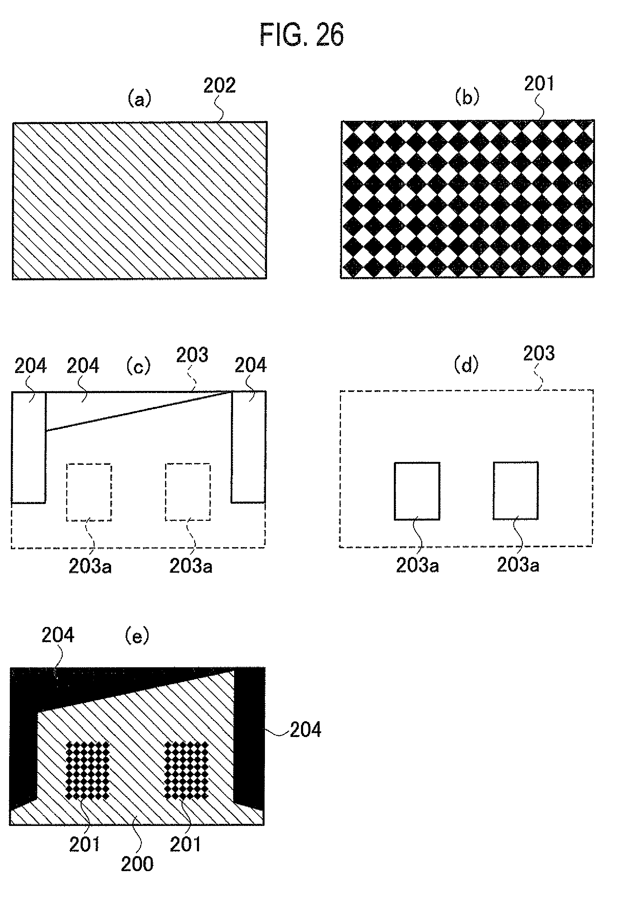

As shown in Fig. 24, the information presentation apparatus provides a projection configuration in which the periphery of the information provision image 1b is blacked out by the mask image 1d provided at the periphery of the information provision image 1b. The projection image 200 is obtained by synthesizing the display object images 201 and the information provision image 202, and includes a mask image 204 that is the mask image 1d generated by the mask processing unit 42, of which the region is set by the mask region setting unit 41, as shown in Fig. 25. The projection image 200 is obtained by synthesizing the information provision image 202 as the information provision image 1b shown in Fig. 26(a), the display object image 201 shown in Fig. 26(b) and the mask image 204, and using the display object regions 203a shown as Fig. 26(d) to generate the projection image 200 shown in Fig. 26(e). In this case, the mask processing unit 42 generates mask data representing the coordinate of the mask image 204 with respect to the projection image 200 as shown in Fig. 26(c). Namely, the mask processing unit 42 generates the mask data specifying the coordinate of the mask image 204 in the projection image 200 as in the case of the display object region data 203 set by the display object region setting unit 14. Then, the projection image data generating unit 13 generates the display object image 201 by using the display object region data 203, and also generates the mask image 204 with an arbitrary color by using the mask data. Accordingly, the information presentation apparatus can project the projection image composed of the display object image 1a, the information provision image 1b and the mask image 1d.

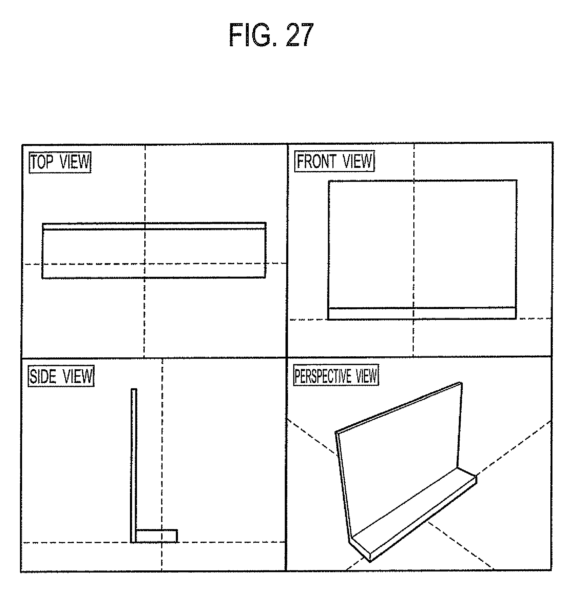

As an another example of the method for setting the mask region by the mask region setting unit 41, as shown in Fig. 27, the three-dimensional shape of the display frame 100 is preliminarily converted into three-dimensional data by use of CAD or a three-dimensional measuring device. Based on the converted three-dimensional data, the region of the display frame in the projection range of the image projecting unit 1 may be simulated according to the relationship of the position/attitude of each display object 111 in a three-dimensional direction and the image projecting unit 1, a projection angle of field, a back focal length, an optical axis angle and a shift amount of the image projecting unit 1 to set the region other than the display frame as the mask region.

In addition, when the three-dimensional shape of the display frame 100 as shown in Fig. 27 is specified by the CAD data or the three-dimensional measuring device, the mask region setting unit 41 may set the mask region based on the three-dimensional shape. Then, the mask region setting unit 14 may simulate the display object region in the projection range of the image projecting unit 1 by using the three-dimensional data based on the relationship of the position/attitude of each display object 111 in a three-dimensional direction and the image projecting unit 1, a projection angle of field, a back focal length, an optical axis angle and a shift amount of the image projecting unit 1.

As described above, according to the information presentation apparatus shown as the sixth embodiment, the mask region setting unit 41 sets the region on which the information provision image 1b is not projected, so that the mask region on which the image for masking is projected or not projected can be provided in the region on which the information provision image 1b is not projected. Accordingly, the information presentation apparatus can project the information provision image 1b in the range along the shape of the display frame 100 or only in the range specified in the display frame 100.

### [Seventh embodiment]

Next, an information presentation apparatus shown as a seventh embodiment will be explained. Note that, the same elements as in the above-described embodiments are indicated by the same reference numerals, and the specific explanations thereof will not be repeated.

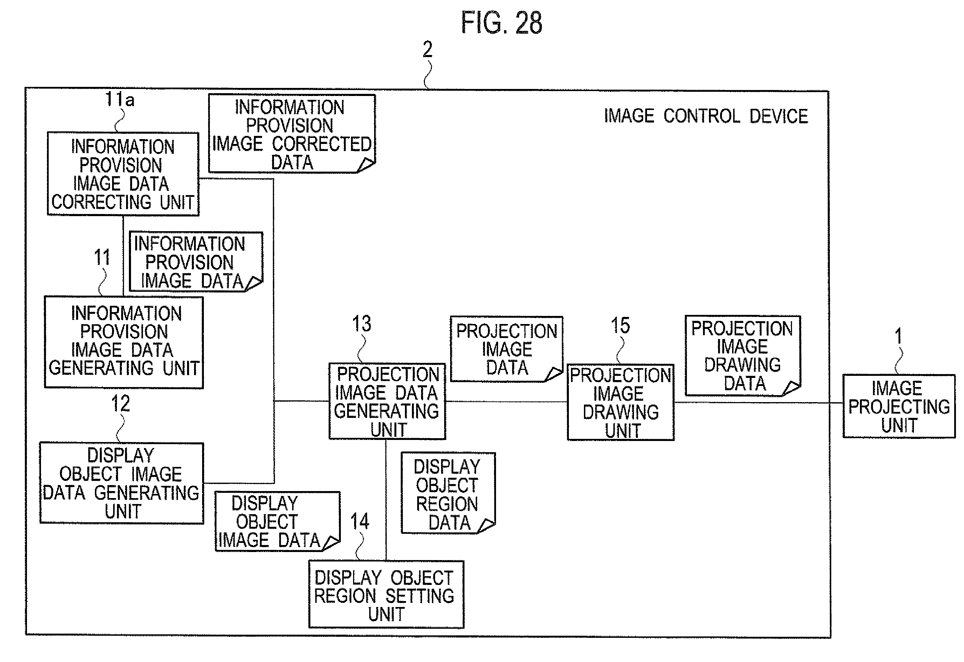

The information presentation apparatus shown as the seventh embodiment in Fig. 28 includes an information provision image data correcting unit 11a to correct the information provision image data generated by the information provision image data generating unit 11 in such a manner that the information provision image 1b projected from the image projecting unit 1 is observed from an specified eye-point position with no distortion.

When the information provision image data generated by the information provision image data generating unit 11 is supplied, the information provision image data correcting unit 11 a corrects the data so that the information provision image 1b is observed with no distortion from the eye-point position of the information provision image 1b. In the above-described embodiments, the information provision image 1b is described as an image with a single color or a simple pattern. However, the information provision image 1b may be an image containing characters, photographs or moving images, in addition to the information provision image 1b in the above-described embodiments. Therefore, in the case where a moving image or the like is projected as the information provision image 1b, it is important that the moving image is processed in such a way as to be observed with no distortion from the eye-point position.

The information provision image data correcting unit 11a performs distortion correction processing with respect to the information provision image data so that the information provision image 1b is observed with no distortion from a specified eye-point position. For example, when the information provision region is composed of one flat surface, the projection image is subjected to trapezoidal correction in a direction counteracting the shift in position and attitude of the image projecting unit 1 and the information provision region. Accordingly, the information provision image data correcting unit 11a can correct image distortion with respect to the information provision image data at the time of projecting the information provision image 1b.

When the information provision region including the information surface 101 is composed of a non-flat surface, the information provision image data correcting unit 11a performs calculation processing using an information provision region shape parameter to specify a three-dimensional shape of the information provision region, an information provision range position/attitude parameter to specify a position and attitude of the information provision range, an image projecting unit specification parameter to specify a specification (a projection angle of field, a back focal length, an optical axis angle and a shift amount) of the image projecting unit 1, an image projecting unit position/attitude parameter to specify a position and attitude of the image projecting unit 1, and an eye-point position parameter to specify an eye-point position of a viewer. According to such calculation processing, the information provision image data correcting unit 11 a converts each pixel position composing the information provision image 1b, so as to correct image distortion at the time of projecting the information provision image 1b on the information surface 101. The image projecting unit specification parameter is uniquely determined depending on the performance and type of the image projecting unit, and set by input by a user using a keyboard or the like. The other parameters may be set by input by the user using a keyboard or the like, or may be obtained according to the measurement result by use of an existing distance sensor, attitude sensor or three-dimensional shape scan.

Here, the distortion correction processing by the information provision image data correcting unit 11a will be explained. The following is an explanation of the processing of the information provision image data correcting unit 11a to correct the information provision image data by using the respective distortion correction parameters so that the information provision image 1b projected on the information surface 101 having an arbitrary shape is observed with no distortion.

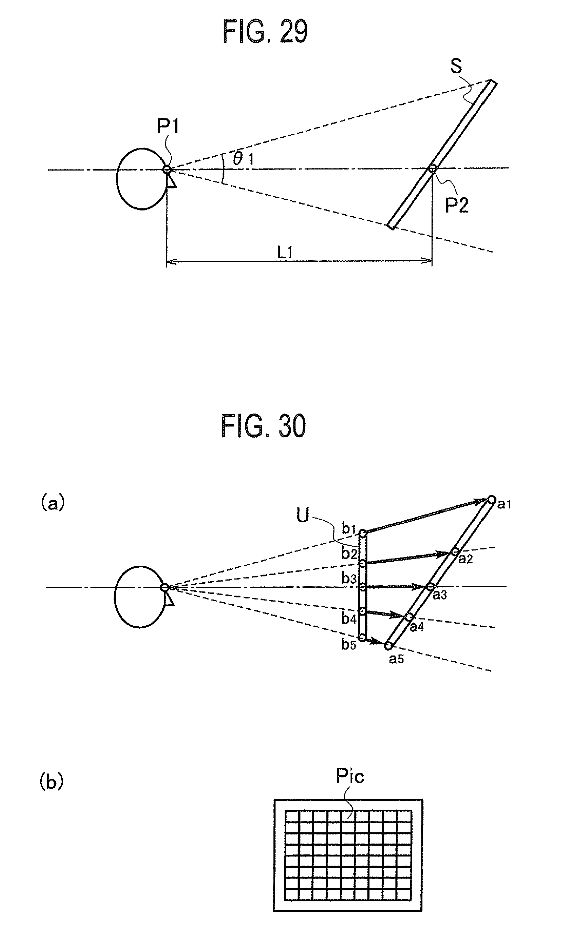

For example, as shown in Fig. 29, it is assumed that there is an information surface S having an arbitrary shape separated from a user by a distance L and inclined with respect to the user. The information surface S is visually recognized from an eye-point position P1 of the user within a viewing angle θ1. The user is separated by a distance L1 from a point P2 on the information surface S intersecting with the center of the eyesight of the user.

With regard to the positional relationship between the eye-point position P1 and the point P2 on the information surface S, it is assumed that the user views a grid-like two-dimensional image Pic (information provision image) shown in Fig. 30(b) on the information surface S via an image surface U as shown in Fig. 30(a). In this case, if the image same as the two-dimensional image Pic of Fig. 30(b) displayed on the image surface U is displayed on the information surface S, it is necessary to acquire the correspondence relationship between each coordinate on the image surface U and each coordinate on the information surface S. As schematically shown in Fig. 30(a), points b1, b2, b3, b4 and b5 on the image surface U correspond to points a1, a2, a3, a4 and a5 on the information surface S, respectively. Therefore, the user visually recognizes the images displayed on the points a1, a2, a3, a4 and a5 on the information surface S as the points b1, b2, b3, b4 and b5 on the image surface U, respectively.

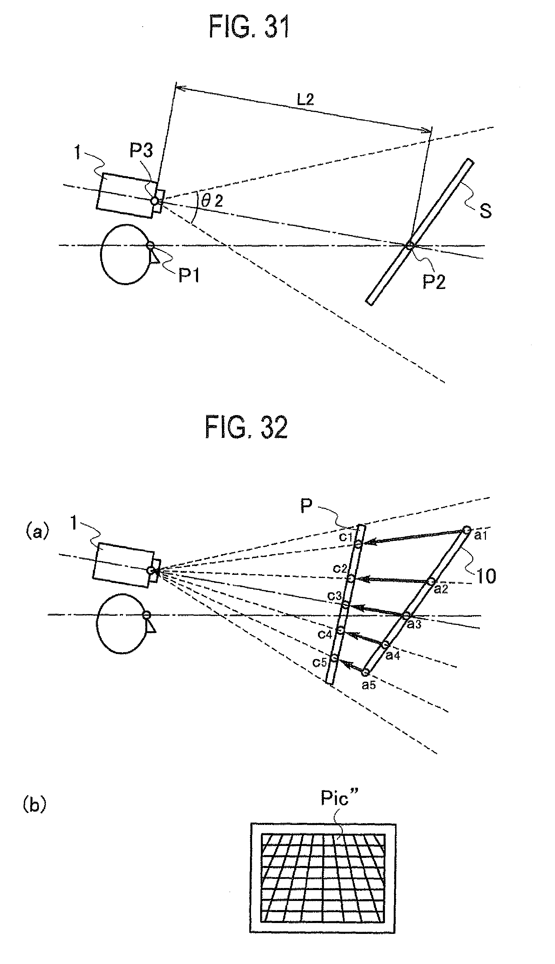

In addition, as shown in Fig. 31, the point P2 at which the line of sight of the user intersects with the information surface S is separated from a projection position P3 of the image projecting unit 1 by a distance L2. The image projecting unit 1 projects projection light within a range of a predetermined projection angle of field θ2.

In this case, with regard to the positional relationship between an image surface P of the image projecting unit 1 and the information surface S, the points a1, a2, a3, a4 and a5 on the information surface S correspond to points c1, c2, c3, c4 and c5 on the image surface P, respectively, as shown in Fig. 32. In other words, the points a1, a2, a3, a4 and a5 on the information surface S are located on the respective points on the straight lines extended from the projection position P3 via the points c1, c2, c3, c4 and c5 on the image surface P.

According to the relationship among the eye-point position P1 and the viewing angle θ1 of the user, the position of the information surface S, the projection position P3 of the image projecting unit 1 and the projection angle of field θ2, when the images are projected on the points c1, c2, c3, c4 and c5 on the image surface P by the image projecting unit 1 as shown in Fig. 32(a), the images are projected on the points a1, a2, a3, a4 and a5 on the information surface S. As a result, the points a1, a2, a3, a4 and a5 on the information surface S are visually recognized as the points b1, b2, b3, b4 and b5 on the image surface U shown in Fig. 30. Therefore, in order to allow the user to visually recognize the two-dimensional image Pic, it is necessary for the image projecting unit 1 to project a distorted two-dimensional image Pic" as shown in Fig. 32(b), based on the correspondence relationship between each coordinate on the information surface S, which corresponds to each coordinate on the image surface U, and each coordinate on the information surface S, which corresponds to each coordinate on the image surface P.

In order to realize the projection operation of the projection light as described above, as shown in Fig. 29, the information presentation apparatus acquires an eye-point position/attitude parameter that indicates the eye-point position indicating the eye-point position P1 of the user and indicates the direction of the line of sight, and a viewing angle parameter that indicates the viewing angle θ1 of the user. These parameters of the user define the above-described image surface U.

The information presentation apparatus also acquires shape data of the information surface S on which the projection light emitted from the image projecting unit 1 is projected. The shape data is, for example, CAD data. Here, the eye-point position/attitude parameter is the one in which the positions on the respective X, Y and Z axes and the rotation angles around the axes in a three-dimensional coordinate space are numerically defined. This eye-point position/attitude parameter uniquely determines the distance L1 between the eye-point position P1 and the information surface S, and the attitude of the information surface S with respect to the eye-point position P1. Moreover, the shape data of the information surface S is the one in which a shape region in the three-dimensional coordinate space is defined based on electronic data generated by CAD and the like. This shape data uniquely determines the shape of the information surface S viewed from the eye-point position P1. The shape data of the information surface S and the parameters of the user determine the correspondence relationship between each coordinate of the information surface U and each coordinate of the information surface S.

Furthermore, for the fact that the image projecting unit I is installed as shown in Fig. 31, the information presentation apparatus acquires a position/attitude parameter that indicates the projection position P3 of the image projecting unit 1 and an optical axis direction of the image projecting unit 1, and acquires a projection angle-of-field parameter that indicates the projection angle of field θ2 of the image projecting unit 1. These position/attitude parameter and projection angle-of-field parameter of the image projecting unit 1 indicate the image surface P projected on the information surface S by the image projecting unit 1. When this image surface P is determined, it is determined on which coordinate of the information surface S the projection light projected from the image projecting unit I is projected through the image surface P. In other words, the position/attitude parameter and projection angle-of-field parameter of the image projecting unit 1 and the position/attitude parameter and shape data of the information surface S uniquely determine the range of the information surface S covered with the projection light emitted from the image projecting unit 1. In the case where the image protecting unit 1 is a projector, the projection position P3 is defined by a back focal length and a shift amount thereof, and the projection angle of field θ2 is calculated from a horizontal and vertical projection range located apart from the projection position P3 by a fixed distance and an optical axis angle.

Then, the information presentation apparatus arranges pixels on intersections (c1, c2, c3, c4, c5) between the image surface P and the straight lines which connect the pixels (a1, a2, a3, a4, a5) of the projection light displayed on the information surface S and the projection position P3 of the image projecting unit 1 to each other, thereby composing the two-dimensional image Pic", and projects the two-dimensional image Pic" on the information surface S. Thus, the user can visually recognize the image with no distortion through such a route of the points c1, c2, c3, c4 and c5 on the image surface P, the points a1, a2, a3, a4 and a5 on the information surface S, and the points b1, b2, b3, b4 and b5 on the image surface U.

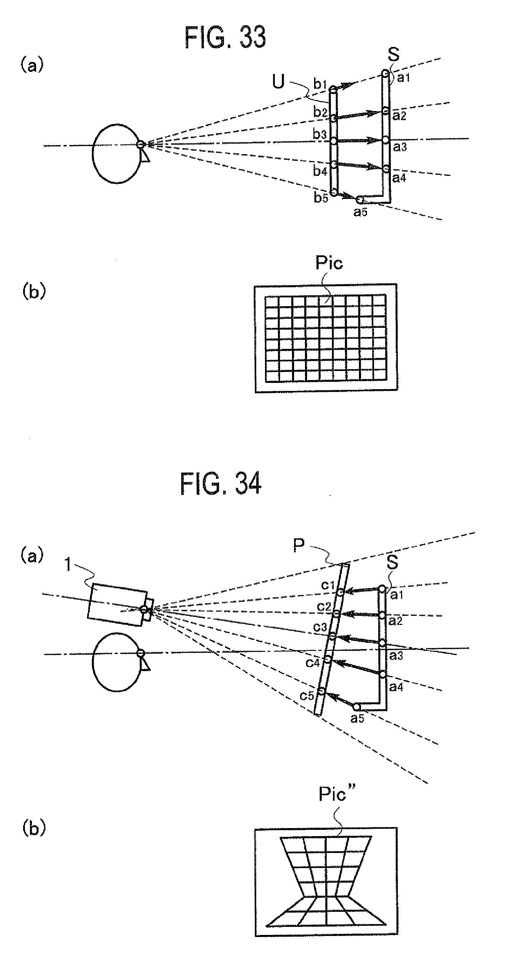

In a similar way, even if the information surface S does not have a flat shape but has an arbitrary shape such as an L shape, the projection light is projected thereon with no distortion, whereby the user can visually recognize the information surface S. It is assumed that the information surface S is an L-shaped object as shown in Fig. 33(a), and the user visually recognizes grid-like projection light as shown in Fig. 33(b). In this case, the user visually recognizes the points a1, a2, a3, a4 and a5 on the information surface S, which are located on the lines extended from the points b1, b2, b3, b4 and b5 on the image surface U. While the points a1, a2, a3, a4 and a5 are visually recognized as described above, the image projecting unit 1 projects the projection light on the image surface P as shown in Fig. 34(a). The projection light that has passed through the points c1, c2, c3, c4 and c5 on the image surface P is projected on the points a1, a2, a3, a4 and a5 on the information surface S, and is visually recognized as the points b1, b2, b3, b4 and b5 on the image surface U shown in Fig. 34(a). Therefore, the image projecting unit 1 projects a two-dimensional image Pic" distorted as shown in Fig. 34(b) on the image surface P. While the image projecting unit 1 projects the two-dimensional image Pic" as described above, the user can visually recognize a to-dimensional image Pic with no distortion as shown in Fig. 33(b).

As described above, according to the information presentation apparatus shown as the seventh embodiment, even in the case where text information, figures and high-definition images are projected on the information provision region, the information provision image data correcting unit 11a can perform distortion correction corresponding to the eye-point position of a viewer in order to provide proper information. Accordingly, even when a complicated image is projected as the information provision image 1b, the information presentation apparatus can allow the viewer to observe the information provision image 1b with no distortion from a specified eye-point position.

In addition, even in the case where the information provision region has a non-flat shape, the information presentation apparatus can project the information provision image 1b to be observed with no distortion from a specified eye-point position due to the distortion correction.

As a specific usage example of the correction processing of the information provision image 1b, the information provision image 1b is projected on the information provision region having a concave shape with respect to the viewer, which makes the image real and allows the viewer to feel encompassed with the image. In the case where the information provision image 1b is projected on the information provision region formed into a shape in such a way as to encompass the display object 111, the effect of providing the display object 111 in the space surrounded by the image can be achieved. Moreover, the information provision image 1b can be projected on a corner of a room, so as to effectively utilize more space. The information provision image 1b can also be projected on a stepped place such as stairs. The information provision image 1b can also be projected on a place where an uneven object such as a post is present. Further, the information provision image 1b can be projected on a white plate simulating a display.

### [Eighth embodiment]

Next, an information presentation apparatus shown as an eighth embodiment will be explained. Note that, the same elements as in the above-described embodiments are indicated by the same reference numeral, and the specific explanations thereof will not be repeated.

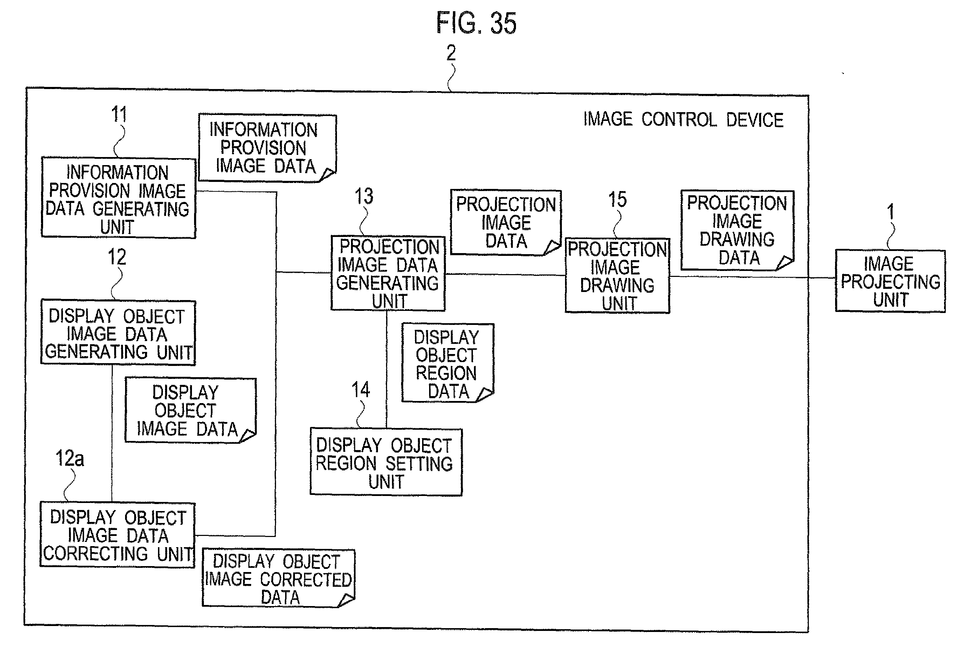

The information presentation apparatus shown as the eighth embodiment in Fig. 35 includes a display object image data correcting unit 12a to correct the display object image data generated by the display object image data generating unit 12 in such a manner that the display object image 1a projected from the image projecting unit 1 is observed from an specified eye-point position with no distortion.

The display object image data correcting unit 12a performs distortion correction processing with respect to the image data as in the case of the information provision image data correcting unit 11a in the seventh embodiment. The display object image data correcting unit 12a performs distortion correction processing with respect to the display object image data generated by the display object image data generating unit 12 so that the display object image 1a is observed with no distortion from an specified eye-point position.

The distortion correction processing by the display object image data correcting unit 12a plays an important role in the case where the display object image 1a includes characters, photographs or moving images. With regard to the correction method of the display object image data by the display object image data correcting unit 12a, for example, when the display object 111 is formed in a planar shape, the display object image is subjected to trapezoidal correction in a direction counteracting the shift in position and attitude of the image projecting unit 1 and the display object 111. Accordingly, the display object image data correcting unit 12a can correct image distortion with respect to the display object image data at the time of projecting the display object image 1a.

When the display object 111 is composed of a non-flat surface, the display object image data correcting unit 12a performs calculation processing by using a shape parameter to specify a three-dimensional shape of the display object 111, a display frame position/attitude parameter to specify a position and attitude of the display frame 100, a projecting unit specification parameter to specify a specification (a projection angle of field, a back focal length, an optical axis angle and a shift amount) of the image projecting unit 1, a position/attitude parameter to specify a position and attitude of the image projecting unit 1, and an eye-point position parameter to specify an eye-point position of a viewer. According to such calculation processing, the display object image data correcting unit 12a converts each pixel position composing the display object image 1a so as to correct image distortion at the time of projecting the display object image 1a on the display object 111.

The distortion correction processing by the information provision image data correcting unit 11a in this embodiment includes the same processing as in the case described with reference to Fig. 29 to Fig. 34. Thus, the explanation thereof will not be repeated.

As described above, according to the information presentation apparatus shown as the eighth embodiment, in the case where the display object image 1a is projected as text information, figures, designs and patterns and high-definition images on the display object 111, the information presentation apparatus performs distortion correction corresponding to the eye-point position of a viewer. Accordingly, the information presentation apparatus can project the display object image 1a to be observed with no distortion from a specified eye-point position.

According to the information presentation apparatus of this embodiment, even when the display object 111 has an arbitrary shape such as a non-flat surface, the display object image 1a can be observed with no distortion from a specified eye-point position due to the distortion correction with respect to the display object image data. For example, a mannequin on which a white T-shirt is put is placed on the display surface 102, and a patterned image as the display object image 1a is projected on the mannequin after the distortion correction processing is performed. Thus, the information presentation apparatus can present various types of T-shirts having different designs without a feeling of strangeness.

### [Ninth embodiment]

Next, an information presentation apparatus shown as a ninth embodiment will be explained. Note that, the same elements as in the above-described embodiments are indicated by the same reference numerals, and the specific explanations thereof will not be repeated.

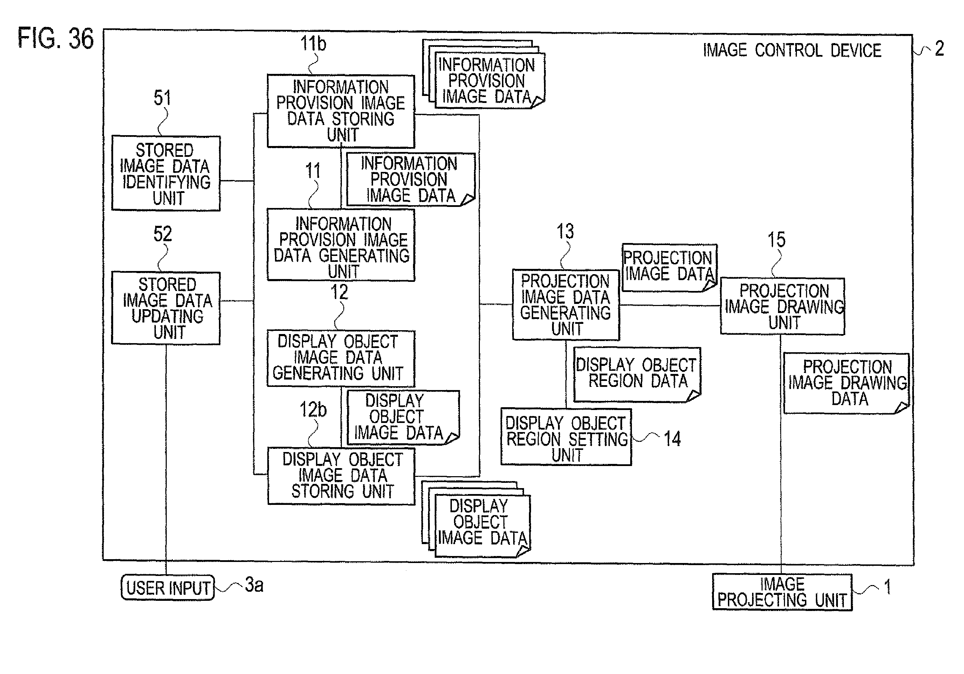

The information presentation apparatus shown as the ninth embodiment can sequentially change images to be projected. The information presentation apparatus shown in Fig. 36 includes an information provision image data storing unit 11b to store data of the information provision image 1b, a display object image data storing unit 12b to store data of the display object image 1a, a stored image data identifying unit 51 to identify the information provision image data and the display object image data stored in the information provision image data storing unit 11b and the display object image data storing unit 12b, and a stored image data updating unit 52 to update arbitrary image data of the information provision image data and the display object image data identified by the stored image data identifying unit 51.

The information presentation apparatus outputs the image data updated by the stored image data updating unit 52 to the projection image data generating unit 13, and generates projection image data for projecting the display object image 1a and the information provision image 1b by the image projecting unit 1.

The information presentation apparatus stores the information provision image data generated by the information provision image data generating unit 11 in the information provision image data storing unit 11b, and stores the display object image data generated by the display object image data generating unit 12 in the display object image data storing unit 12b. Each of the information provision image data storing unit 11b and the display object image data storing unit 12b is composed of, for example, a hard disk device in a personal computer.

Each image data is identifiable by predetermined processing at the time of storing the data in the information provision image data storing unit 11b and the display object image data storing unit 12b. For example, each image data stored in the information provision image data storing unit 11b and the display object image data storing unit 12b is assigned with an identification number and an identification name by the stored image data identifying unit 51 so that each image data is identifiable, and then stored.

The stored image data updating unit 52 updates the image data supplied to the projection image data generating unit 13 pursuant to, for example, an input signal (user input) according to the operation by a user. That is, the stored image data updating unit 52 updates the information provision image data and the display object image data that are output from the projection image data generating unit 13. In this case, the stored image data updating unit 52 is supplied with an input signal 3a to update arbitrary image data to be output to the projection image data generating unit 13, which is selected from the image data identified by the stored image data identifying unit 51 and stored in the information provision image data storing unit 11b and the display object image data storing unit 12b. Then, the updated image data is transmitted to the projection image data generating unit 13, so that the projection image is generated by synthesizing the display object image 1a and the information provision image 1b.

Here, the operation by the user to update the image data may be direct input by pressing a keyboard, a switch or the like, or may be indirect input by, for example, detecting hand movements of the user by using a sensor function to measure the conditions, such as an image sensor, a temperature sensor, an optical sensor and an ultrasonic wave sensor, provided in the display frame 100.

The update processing of the image data by the stored image data updating unit 52 may be performed in a predetermined order, or may be updated according to a direct input operation. With regard to an indirect input operation, the corresponding image data may be updated for each condition, such as a case where the hand of the user enters a specified region.

In addition, the update processing of the image data by the stored image data updating unit 52 may be performed in an unspecified order by random processing, or may be performed by detecting environmental changes in the display frame 100 and using a threshold value obtained by the detection result by use of a sensor function such as a temperature sensor and an optical sensor. Accordingly, the stored image data updating unit 52 can update the image data by the method not reflecting an intention of the user.

As described above, the information provision apparatus shown as the ninth embodiment can update the image data preliminarily stored in the information provision image data storing unit 11b and the display object image data storing unit 12b according to the operation by the user. In addition, the information provision apparatus can project the information that the user desires to provide or obtain in accordance with the intention or action of the user.

The information presentation apparatus can also change and project the display object image 1a in accordance with the intention or action of the user. For example, the information presentation apparatus can project the display object image 1a to illuminate the display object 111, project the black display object image 1a to achieve the effect of projecting no image on the display object 111, and project the display object image 1a to change the texture of the display object 111.

As one specific example, in the case where various types of mobile phones are used as the display object 111, and the wall on which the mobile phones are displayed is assumed to be the information provision region, the following image update is carried out.

For example, normally, the display object image 1a to illuminate all the mobile phones displayed is projected on the display object region, and the information common to all the mobile phones (characters, videos) is projected on the information provision region as the information provision image 1b.

While keeping this state, when a user presses a button, the input signal 3a is supplied to the stored image data updating unit 52. Then, the display object image 1a to entirely illuminate one mobile phone corresponding to the operation is projected on the display object region of this mobile phone. In addition, the image (characters, videos) to explain the characteristics of the mobile phone is projected on the information provision region as the information provision image 1b.

Moreover, when detecting the hand movements of the user in front of the mobile phone of which the user desires to obtain the explanation, the sensor function detects the position of the hand of the user, and the input signal 3a is then supplied to the stored image data updating unit 52. Thus, the display object image 1a to entirely illuminate the corresponding mobile phone is projected on the display object region, and the image to explain the characteristics of the mobile phone is projected on the information provision region as the information provision image 1b.

Further, when the user picks up the mobile phone of which the user desires to obtain the explanation, the sensor function detects the movement of the mobile phone from a designated position. Then, the display object image 1a to indicate the position to which the mobile phone picked up should be back (the designated position at which the mobile phone is originally displayed) is projected on the display object region, and the information provision image 1b to explain the characteristics of the mobile phone is projected on the information provision region. Accordingly, the information presentation apparatus can clearly indicate the position to which the mobile phone should be back with respect to the user.

### [Tenth embodiment]

Next, an information presentation apparatus shown as a tenth embodiment will be explained. Note that, the same elements as in the above-described embodiments are indicated by the same reference numerals, and the specific explanations thereof will not be repeated.

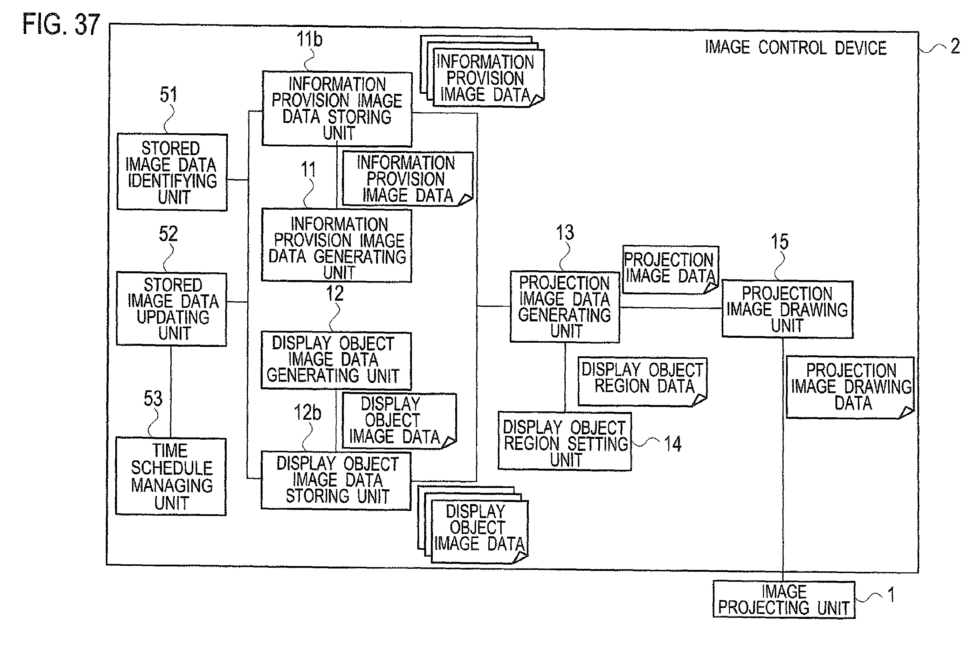

The image control device 2 of the information presentation apparatus shown as the tenth embodiment in Fig. 37 includes a time schedule managing unit 53 to set the update order of the information provision image data and the display object image data identified by the stored image data identifying unit 51 and updated by the stored image data updating unit 52, on the time axis. The projection image data generating unit 13 generates the projection image data to project the image by the image projecting unit 1 according to the updated content set by the time schedule managing unit 53.

The time schedule managing unit 53 automatically updates arbitrary data, which is set by a user and selected from the image data stored in the information provision image data storing unit 11b and the display object image data storing unit 12b and identified by the stored image data identifying unit 51, using an arbitrary time schedule. The time schedule is identified by the time schedule managing unit 53 in such a manner that the identification number of the image data identified by the stored image data identifying unit 51 is set along the time axis. The time schedule managing unit 53 may manage the time schedule of either the display object image 1a or the information provision image 1b.

The stored image data updating unit 52 allows the information provision image data storing unit 11b and the display object image data storing unit 12b to transmit the image data to the projection image data generating unit 13 in accordance with the time schedule managed by the time schedule managing unit 53.

According to the information presentation apparatus described above, the presentation timing of the display object image 1a and the information provision image 1b can be managed using the time schedule. In addition, the information presentation apparatus can create contents having a concept such as promotion, product explanation and aesthetic exhibition of the display object 111 as a commercial product so as to realize space directing.

The time schedule managed by the time schedule managing unit 53 may be a time schedule to update the image data in random order, in addition to the time schedule in accordance with the operation by the user. Accordingly, the information presentation apparatus can realize image directing using the image data updated while not reflecting an intention of the user.

### [Eleventh embodiment]

Next, an information presentation apparatus shown as an eleventh embodiment will be explained. Note that, the same elements as in the above-described embodiments are indicated by the same reference numerals, and the specific explanations thereof will not be repeated.

The information presentation apparatus shown as the eleventh embodiment includes, in the configuration of the tenth embodiment shown in Fig. 37, a sound producing unit to produce a sound corresponding to a dynamic display state of each image projected by the image projecting unit 1 in the update order of the information provision image data and the display object image data set on the time axis by the time schedule managing unit 53.

The sound producing unit may be separated from the image control device 2, and may emit a sound from a speaker taking advantage of the function as a personal computer. The information presentation apparatus of this embodiment can set the time schedule due to the time schedule managing unit 53, and set sound data on the same time axis as the time schedule by using an audio file or the like not shown in the figure according to the operation by a user,

Therefore, the information presentation apparatus of this embodiment can realize auditory directing by setting BGM in synchronization with the time schedule of the display object image 1a and the information provision image 1b, in addition to visual directing to project the display object image 1a and the information provision image I b on the information provision region in the display frame 100.

### [Twelfth embodiment]

Next, an information presentation apparatus shown as a twelfth embodiment will be explained. Note that, the same elements as in the above-described embodiments are indicated by the same reference numerals, and the specific explanations thereof will not be repeated.

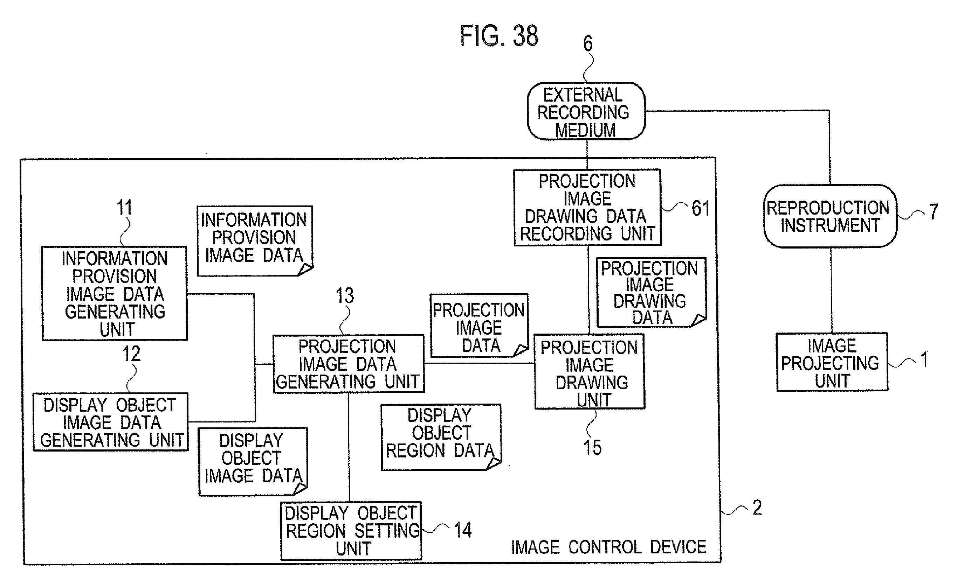

The image control device 2 of the information presentation apparatus shown as the twelfth embodiment in Fig. 38 includes a projection image drawing data recording unit 61 to record the projection image drawing data drawn by the projection image drawing unit 15 in an external recording medium 6. The information presentation apparatus outputs the projection image drawing data stored in the external recording medium 6 to the image projecting unit 1 by use of a reproduction instrument 7.

When the projection image drawing unit 15 generates the projection image drawing data, the information presentation apparatus records the data in the external recording medium 6 through the projection image drawing data recording unit 61 once. The projection image drawing data recording unit 61 corresponds to a hard disk device in a personal computer. When the projection image drawing data after drawing processing in the projection image drawing unit 15 is stored, the information presentation apparatus records the projection image drawing data in the external recording medium 6.

Examples of the external recording medium 6 include media such as a general-purpose DVD. The projection image drawing data recording unit 61 records data in a DVD in the case where the DVD that is the external recording medium 6 is set. When the image projecting unit 1 projects the display object image 1a and the information provision image 1b, the reproduction instrument 7 plays back the projection image drawing data recorded in the external recording medium 6 according to the operation by a user or the like.

The information presentation apparatus described above records the projection image drawing data in the external recording medium 6. Therefore, it is not necessary to perform the drawing processing in the projection image drawing unit 15 every time the display object image 1a and the information provision image 1b are projected. In such a way, the configuration of the information presentation apparatus can be simplified.

According to the above-described embodiments, the information presentation apparatus generates the projection image drawing data by the operation to set the display object region by using the photographed image photographed by the photographing unit 4, the operation to adjust the display object region, the operation to exert the gradation effect, and the operation to set the mask image 204. The information presentation apparatus records the projection image drawing data obtained by these operations in the external recording medium 6, and only reads the projection image drawing data from the external recording medium 6. Therefore, the information presentation apparatus can simply project the display object image 1a and the information provision image 1b by using the resulting projection image drawing data from the operations.

### [Thirteenth embodiment]

Next, an information presentation apparatus shown as a thirteenth embodiment will be explained. Note that, the same elements as in the above-described embodiments are indicated by the same reference numerals, and the specific explanations thereof will not be repeated.

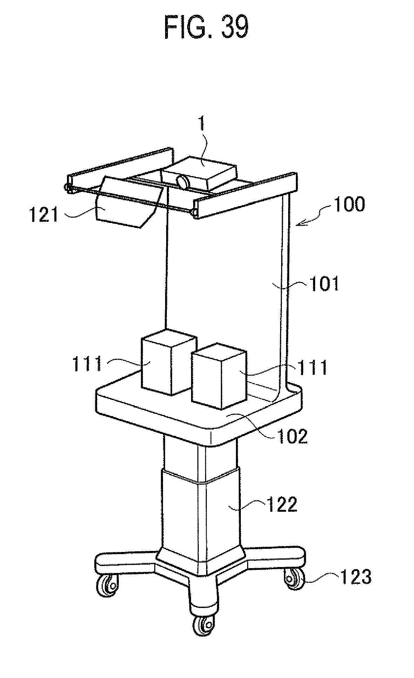

The information presentation apparatus shown as the thirteenth embodiment composes the display frame 100 as shown in Fig. 39.

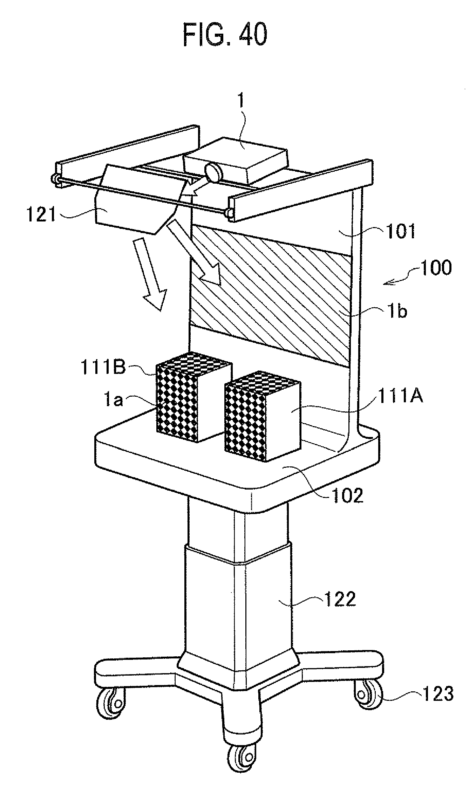

The information presentation apparatus includes the information provision region including the display surface 102 and the information surface 103 of the display frame 100, a light emitting position of the image projecting unit 1 and a mirror 121, each of which is provided in a manner that meets a predetermined positional relationship. Namely, as shown in Fig. 40, each element is arranged in such a manner that the display object image 1a and the information provision image 1b projected from the image projecting unit 1 are reflected by the mirror 121 so as to be projected on the information surface 101 and the display surface 102.

The mirror 121 is provided on an extended line in the emitting direction of the image projecting unit 1. The mirror 121 is provided at an angle to receive the display object image 1a and the information provision image 1b emitted from the image projecting unit 1 and allow the received display object image 1a and information provision image 1b to be reflected to the information provision region. Namely, the mirror 121 is provided to have a distance to the image projecting unit 1, the information surface 101 and the display surface 102 in such a manner that the display object image 1a and the information provision image 1b projected by the image projecting unit 1 are projected on approximately the entire surface of the information provision region.

According to the information provision apparatus described above, since the display frame 100 and the image projecting unit 1 are integrally formed, space-saving can be realized. The information provision apparatus of this embodiment may include an elevator unit 122 to lift the whole display frame 100 including the display surface 102, the information surface 101 and the image projecting unit 1 up and down. Thus, the display surface 102 can be lifted up and down. In addition, wheels 123 may be provided below the elevator unit 122. Accordingly, the display frame 100 and the image projecting unit 1 integrally formed can be easily moved.

### [Fourteenth embodiment]

Next, an information presentation apparatus shown as a fourteenth embodiment will be explained. Note that, the same elements as in the above-described embodiments are indicated by the same reference numerals, and the specific explanations thereof will not be repeated.

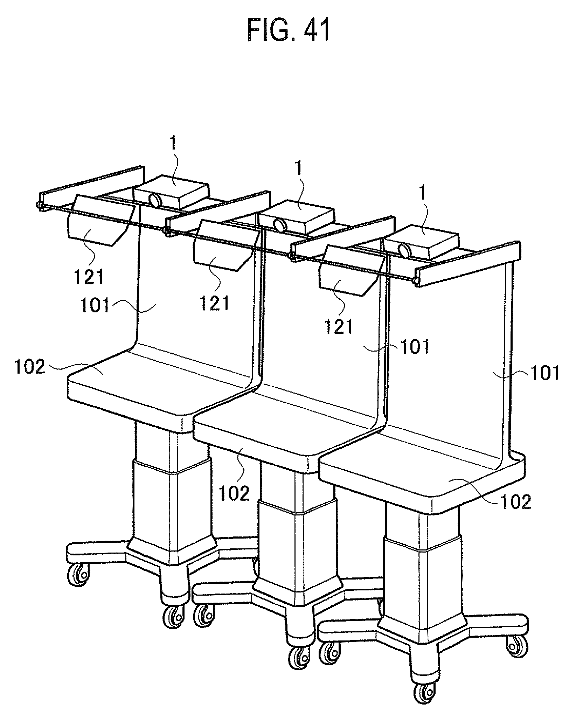

The information presentation apparatus shown as the fourteenth embodiment includes the plural display frames 100 and image projecting units 1 as shown in Fig. 41. The information presentation apparatus having such a configuration is referred to as a so-called multi projection. Since the information presentation apparatus includes the plural image projecting units 1, the display object image 1a and the information provision image 1b can be projected from the respective image projecting units 1.

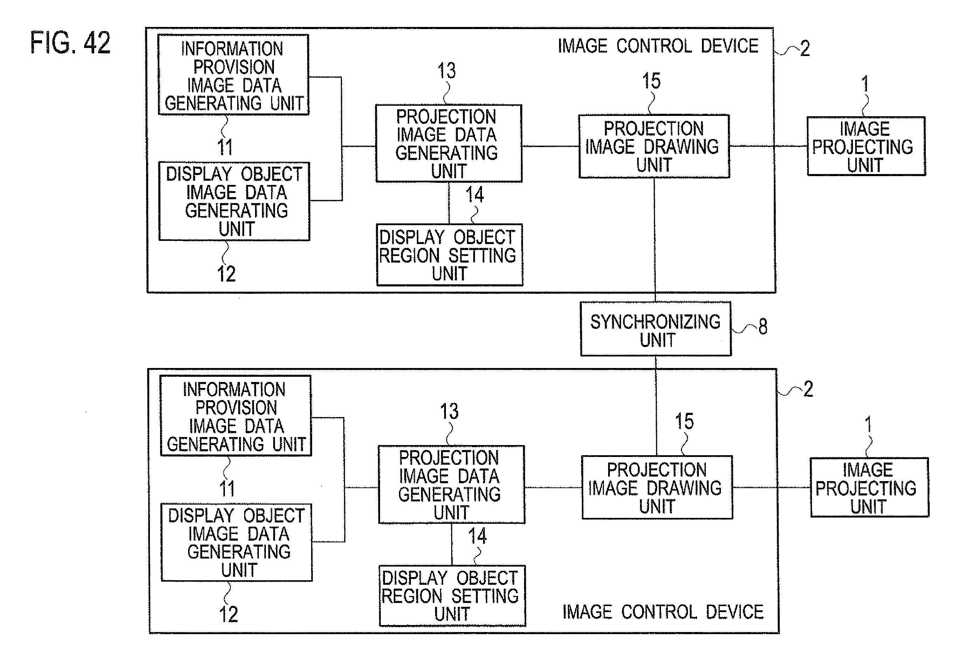

As shown in Fig. 42, the information presentation apparatus includes the image projecting unit 1 and the image control device 2 for each display frame 100. Thus, the information presentation apparatus allows each image projecting unit 1 to generate the display object image 1a and the information provision image 1b, set the display object region and generate the projection image data.

A synchronizing unit 8 is provided between the respective image control devices 2 to synchronize the mutual projection image drawing data supplied to the image projecting unit 1 from the projection image drawing unit 15 in each image control device 2. Each synchronizing unit 8 issues an output command of the projection image drawing data to the projection image drawing units 15 connected to each other according to the same clock signal. Accordingly, the information presentation apparatus can allow the plural image projecting units 1 to output the synchronized projection images.

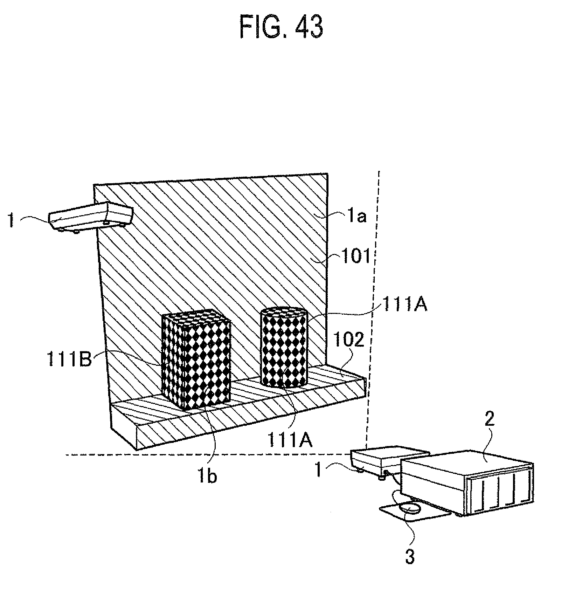

The information presentation apparatus may use the plural image projecting units 1 to provide at arbitrary positions as shown in Fig. 43. Therefore, the information presentation apparatus can set the information provision regions and the display object regions viewed from the respective image projecting units 1 to project the display object images 1a and the information provision images 1b. Thus, the information presentation apparatus can project the plural display object images 1a to cover the display object 111.

The information presentation apparatus preferably sets an overlapped region between the images projected by the plural image projecting units 1, and decreases luminance at the overlapped region so as to reduce unevenness of luminance.

In the case where the display frames 100 are integrally formed as shown in Fig. 41, the information provision region can be extended by use of the respective mirrors 121 provided at the display frames 100.

In addition, the information presentation apparatus can project the plural information provision regions by the respective image control devices 2. The information presentation apparatus may have different degrees of luminance in each image control device 2.

The information presentation apparatus described above can project the display object image 1a and the information provision image 1b on the wide information provision region that may not be covered by one image projecting unit 1.

Moreover, the information presentation apparatus decreases the projection range in each image projecting unit 1, thereby covering the information provision region by the plural image projecting units 1. The decrease in projection range for each image projecting unit I can provide a high-definition projection image in the projection range. In other words, if one image projecting unit 1 projects the image to cover a wide region, the projection range per pixel is increased and the resulting image becomes grainy. However, the decrease in projection range can avoid such a grainy image.

Further, as shown in Fig. 43, the information presentation apparatus can project the display object images 1a on the display object 111 from various directions by the plural image projecting units 1. Therefore, the display object 111 I can be coated with the display object images 1a. In addition, the image projecting unit 1 is arranged to be able to project the information provision image 1b on a shadow area of the display object 111 caused by the projection image projected from the other image projecting unit 1. Accordingly, the shadow can be disappeared.

### [Fifteenth embodiment]

Next, an information presentation apparatus shown as a fifteenth embodiment will be explained. Note that, the same elements as in the above-described embodiments are indicated by the same reference numerals, and the specific explanations thereof will not be repeated.

The information presentation apparatus shown as the fifteenth embodiment converts the information provision image data generated by the information provision image data generating unit 11 and the display obj ect image data generated by the display object image data generating unit 12 into stereoscopic image data, thereby projecting a projection image including a stereoscopic image by the image projecting unit 1. In order to project the stereoscopic image, it is necessary to perform the distortion correction processing described above.

For example, a polarization method is employed when the image projecting unit 1 projects the display object image 1a and the information provision image 1b as the stereoscopic image. The information presentation apparatus employing the polarization method includes two image projecting units 1 capable of projecting a right-eye image and a left-eye image. A polarizing filter is provided to split the entire projection light that is output from the respective image projecting units 1 by light in a right-eye polarization direction and light in a left-eye polarization direction. The polarizing filter may be circular polarization or linear polarization.

The information presentation apparatus preferably coats the information provision region, the display object and the display surface 102 with silver so that the polarization surface is not deformed by the display object image 1a and the information provision image 1b projected by the image projecting unit 1.

In order to project the stereoscopic image, the information presentation apparatus corrects the projection image by the distortion correction processing described above so that the projection image is observed with no distortion from a specified eye-point position. Then, proper disparity is provided between the right-eye image and the left-eye image, and the right-eye image and the left-eye image are synchronized and projected. In the case of using the two image projecting units 1, proper disparity can be provided after the right-eye image and the left-eye image projected from the two image projecting units 1 are corrected to correspond with each other at a specified eye-point position.

The right-eye image and the left-eye image are visually recognized through glasses provided with the polarizing filter that a user puts on. Accordingly, the information presentation apparatus can allow the display object image 1a and the information provision image 1b to be recognized as the stereoscopic image.

The information presentation apparatus of this embodiment is not limited to the polarization method, and may apply an existing stereoscopic image presentation technology such as a time-sharing method and a spectroscopic method to the image projecting unit 1.

As described above, the information presentation apparatus can present the display object image 1a and the information provision image 1b as the stereoscopic image, so as to present the image having a sense of depth on the information surface 101 and the display object 111. In addition, due to the stereoscopic technology, an object is displayed as if it is present in front of a viewer, and therefore, the shape of the object can be clearly presented. Moreover, the information presentation apparatus can attract the attention of the user by emphasizing an amusement property using a pop-up image and the-like.

### [Sixteenth embodiment]

Next, an information presentation apparatus shown as a sixteenth embodiment will be explained. Note that, the same elements as in the above-described embodiments are indicated by the same reference numerals, and the specific explanations thereof will not be repeated.

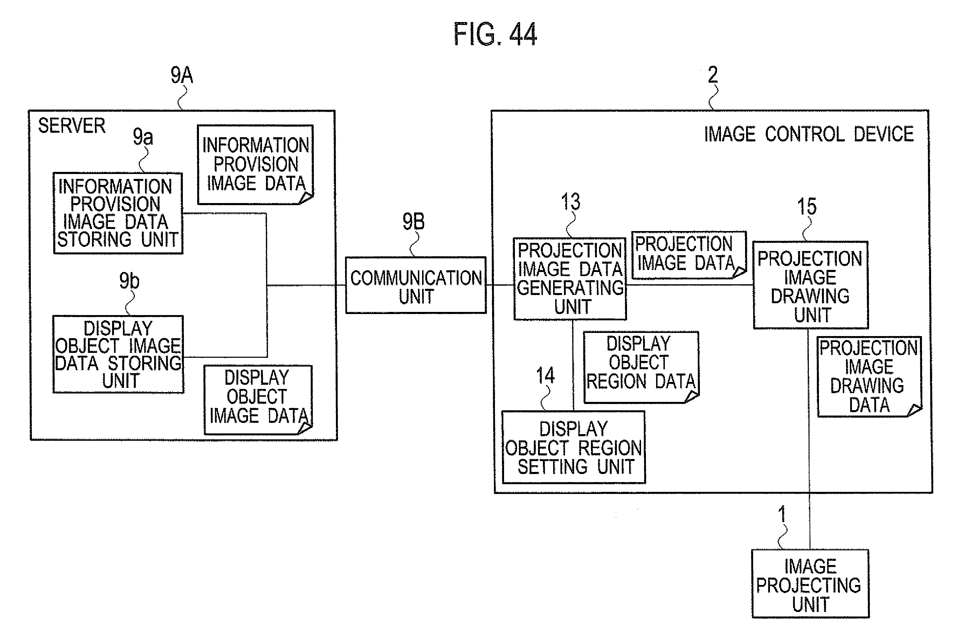

The information presentation apparatus shown as the sixteenth embodiment includes a server 9A and a communication unit 9B as shown in Fig. 44, Fig. 45 and Fig. 46. In the information presentation apparatus, the communication unit 9B (communication means) connected to the image control device 2 receives information provision image data and display object image data from the server 9A through the Internet.

As shown in Fig. 44, the server 9A includes an information provision image data storing unit 9a and a display object image data storing unit 9b to store the information provision image data and the display object image data generated by the information provision image data generating unit 11 and the display object image data generating unit 12, respectively. The server 9A transmits, to the communication unit 9B, the information provision image data stored in the information provision image data storing unit 9a and the display object image data stored in the display object image data storing unit 9b automatically or in response to a demand from the image control device 2. Then, the communication unit 9B transmits the received information provision image data and display object image data to the image control device 2.

Therefore, the information presentation apparatus can generate the projection image data by the projection image data generating unit 13 by using the information provision image data and the display object image data transmitted from the server 9A.

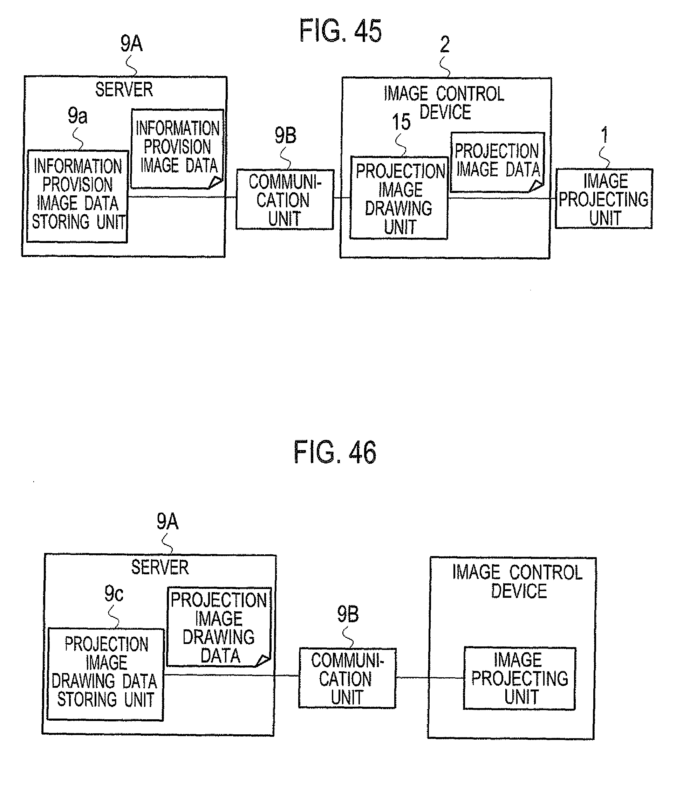

In addition, the server 9A may include only the information provision image data storing unit 9a as shown in Fig. 45. Thus, the display object image 1a for the display object 111 is generated by the image control device 2, and only the information provision image data is downloaded from the server 9A to the image control device 2. The image control device 2 only draws the downloaded information provision image data by the projection image drawing unit 15.

Further, the server 9A may include only a projection image drawing data storing unit 9c as shown in Fig. 46. Thus, only the projection drawing data is downloaded from the server 9A to the image control device 2 and output to the image projecting unit 1.

As described above, the information presentation apparatus can download the desired display object image 1a and information provision image 1b to the image control device 2 by the user. In addition, up-to-date information or the like can be automatically downloaded from the server 9A to the image control device 2. Therefore, the image control device 2 can select or automatically receive arbitrary data from various information provision image data and thus it is not necessary to store vast amounts of data in the image control device 2.

The above-described embodiments show examples of the present invention. Therefore, the present invention is not limited to these embodiments, and can be modified in various ways other than these embodiments depending on designs or the like within the scope not deviating from the teaching of the present invention.

### INDUSTRIAL APPLICABILITY

The present invention can be utilized in the case of displaying an object such as a commercial product.

### REFERENCE SIGNS LIST

- 1: Image projecting unit
- 1a: Display object image
- 1b: Information provision image
- 1c: Colored portion
- 1d: Mask image
- 2: Image control device
- 3: Operation unit
- 4: Photographing unit
- 5: Display
- 6: External recording medium
- 7: Reproduction instrument
- 8: Synchronizing unit
- 9A: Server
- 9B: Communication unit
- 9a: Information provision image data storing unit
- 9b: Display object image data storing unit
- 9c: Projection image drawing data storing unit
- 11: Information provision image data generating unit
- 11a: Information provision image data correcting unit
- 11b: Information provision image data storing unit
- 12: Display object image data generating unit
- 12a: Display object image data correcting unit
- 12b: Display object image data storing unit
- 13: Projection image data generating unit
- 14: Display object region setting unit
- 14a: Display object region adjusting unit
- 15: Projection image drawing unit
- 21: Photographed image data generating unit
- 22: Photographed image data storing unit
- 23: Photographed image data correcting unit
- 24: Display object region trimming unit
- 31: Outline width setting unit
- 32: Outline gradating unit
- 41: Mask region setting unit
- 42: Mask Processing unit
- 51: Stored image data identifying unit
- 52: Stored image data updating unit
- 53: Time schedule managing unit
- 61: Projection image drawing data recording unit
- 100: Display frame
- 101: Information surface
- 102: Display surface
- 103: Display surface
- 104: Ceiling
- 111: Display object
- 121: Mirror
- 122: Elevator unit
- 123: Wheel

## Claims

1. An information presentation apparatus, comprising:
a display frame having a display surface to display a display object;
a first image data generating unit that generates first image data to project a first image including arbitrary presentation information on an information provision region including at least part of a region in which the display object is present;
a second image data generating unit that generates second image data to project an arbitrary image on the display object;
a display object region setting unit that sets a display object region in which the display object is present in the information provision region;
a projection image data generating unit that generates projection image data obtained by synthesizing the first image data and the second image data;
a projection image drawing unit that draws the projection image data; and
an image projecting unit that projects a projection image drawn by the projection image drawing unit.

2. The information presentation apparatus according to claim 1, wherein the second image is illumination light simulating light, and illuminates a whole of or a part of the display object.

3. The information presentation apparatus according to claim 1 or 2, further comprising:
a photographing unit that photographs the information provision region;
a photographed image data generating unit that generates photographed image data of a photographed image photographed by the photographing unit;
a photographed image data storing unit that stores the photographed image data;
a photographed image data correcting unit that generates photographed corrected image data in which the photographed image data is corrected in such a manner that the photographed image photographed by the photographing unit corresponds to the projection image projected by the image projecting unit; and
a display object region specifying unit that specifies a region corresponding to the display object region from the photographed corrected image data generated by the photographed image data correcting unit,
wherein the display object region setting unit sets the region specified by the display object region specifying unit as the display object region.

4. The information presentation apparatus according to any one of claims 1 to 3, further comprising:
a display object region adjusting unit that adjusts a position and a shape of the display object region set by the display object region setting unit.

5. The information presentation apparatus according to any one of claims 1 to 4, further comprising:
an outline width setting unit that inputs an outline width of the display object region; and
an outline gradating unit that processes the second image data in such a manner that a pixel value in the outline width set by the outline width setting unit gradually changes from an inner side toward an outer side.

6. The information presentation apparatus according to any one of claims 1 to 5, further comprising:
a mask region setting unit that sets a mask region to cover the information provision region in an arbitrary state; and
a mask processing unit that corrects the first image data to provide the mask region set by the mask region setting unit.

7. The information presentation apparatus according to any one of claims 1 to 6, further comprising:
a first image data correcting unit that corrects the first image data generated by the first image data generating unit in such a manner that the first image projected from the image projecting unit is observed from an specified eye-point position with no distortion.

8. The information presentation apparatus according to any one of claims 1 to 7, further comprising:
a second image data correcting unit that corrects the second image data generated by the second image data generating unit in such a manner that the second image projected from the image projecting unit is observed from an specified eye-point position with no distortion.

9. The information presentation apparatus according to any one of claims 1 to 8, further comprising:
a first image data storing unit that stores the first image data;
a second image data storing unit that stores the second image data;
a stored image data identifying unit that identifies the first image data and the second image data stored in the first image data storing unit and the second image data storing unit; and
a stored image data updating unit that updates arbitrary image data of the first image data and the second image data identified by the stored image data identifying unit,
wherein the image data updated by the stored image data updating unit is transmitted to the projection image data generating unit to generate the projection image data for projecting the image by the image projecting unit.

10. The information presentation apparatus according to claim 9, further comprising:
a time schedule managing unit that sets an update order of the first image data and the second image data identified by the stored image data identifying unit and updated by the stored image data updating unit on a time axis,
wherein the projection image data generating unit generates the projection image data for projecting the image by the image projecting unit according to an updated content set by the time schedule managing unit.

11. The information presentation apparatus according to claim 10, further comprising:
a sound producing unit that produces a sound corresponding to a dynamic display state of each image projected by the image projecting unit in the update order of the first image data and the second image data set on the time axis by the time schedule managing unit.

12. The information presentation apparatus according to any one of claims 1 to 11, further comprising:
a projection image drawing data recording unit that records projection image drawing data drawn by the projection image drawing unit in an external recording medium,
wherein the projection image drawing data recorded in the external recording medium is output to the image projecting unit by use of a reproduction instrument.

13. The information presentation apparatus according to any one of claims 1 to 12,
wherein the display frame, a light emitting position of the image projecting unit and a mirror are provided in a manner that meets a predetermined positional relationship, and
the mirror is provided on a line extended in an emitting direction of the image projecting unit, is provided at an angle to receive the projection image emitted from the image projecting unit and allow the projection image to be reflected to the information provision region, and is provided while having a distance to the image projecting unit and the display frame in such a manner that the projection image projected by the image projecting unit is projected on approximately an entire surface of the information provision region.

14. The information presentation apparatus according to any one of claims I to 13, further comprising a plurality of the image projecting units, each of which projects presentation information and the second image.

15. The information presentation apparatus according to any one of claims 7 to 14,
wherein the first image data and/or the second image data are stereoscopic image data, and
the image projecting unit projects a projection image including a stereoscopic image.

16. The information presentation apparatus according to any one of claims 1 to 15, further comprising:
a communication unit that communicates with a server,
wherein the communication unit receives at least one of the first image data, the second image data, display object region data to set the display object region and the drawn projection image from the server to allow the image projecting unit to project the projection image.
